(19) Europäisches Patentamt
European Patent Office
Office européen des brevets

(11) EP 1 590 384 B1

(12) # EUROPÄISCHE PATENTSCHRIFT

(45) Veröffentlichungstag und Bekanntmachung des Hinweises auf die Patenterteilung:
**05.09.2007 Patentblatt 2007/36**

(21) Anmeldenummer: **04703360.0**

(22) Anmeldetag: **20.01.2004**

(51) Int Cl.:
***C08F 220/00*** *(2006.01)* ***C08G 18/80*** *(2006.01)*

(86) Internationale Anmeldenummer:
**PCT/EP2004/000392**

(87) Internationale Veröffentlichungsnummer:
**WO 2004/069884 (19.08.2004 Gazette 2004/34)**

(54) **BESCHICHTUNGSSTOFFE, VERFAHREN ZU IHRER HERSTELLUNG UND IHRE VERWENDUNG**

COATING MATERIALS, METHOD FOR THE PRODUCTION THEREOF, AND USE THEREOF

MATERIAUX DE REVETEMENT, LEUR PROCEDE DE PRODUCTION ET LEUR UTILISATION

(84) Benannte Vertragsstaaten:
**AT BE BG CH CY CZ DE DK EE ES FI FR GB GR HU IE IT LI LU MC NL PT RO SE SI SK TR**

(30) Priorität: **07.02.2003 DE 10305119**

(43) Veröffentlichungstag der Anmeldung:
**02.11.2005 Patentblatt 2005/44**

(73) Patentinhaber: **BASF Coatings AG**
**48165 Münster (DE)**

(72) Erfinder:
- **BAUMGART, Hubert**
  **48162 Münster (DE)**
- **ROTERS, Annette**
  **48163 Münster (DE)**
- **COOK, Vince**
  **48163 Münster (DE)**
- **FARWICK, Thomas**
  **48727 Billerbeck (DE)**
- **HASSE, Sandra**
  **48317 Drensteinfurt (DE)**
- **KETTELER, Cornelia**
  **48282 Emsdetten (DE)**
- **RÖCKRATH, Ulrike**
  **48308 Senden (DE)**

(56) Entgegenhaltungen:
**WO-A-03/037952** **CH-A- 491 167**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

### Gebiet der Erfindung

Die vorliegende Erfindung betrifft neue Beschichtungsstoffe. Außerdem betrifft die vorliegende Erfindung ein neues Verfahren zur Herstellung von Beschichtungsstoffen. Des Weiteren betrifft die vorliegende Erfindung die Verwendung der neuen Beschichtungsstoffe zur Herstellung von Beschichtungen, Klebschichten und Dichtungen, vorzugsweise kratzfeste Beschichtungen, bevorzugt kratzfeste Klarlackierungen, insbesondere für kratzfeste Mehrschichtlackierungen.

### Stand der Technik

In den vergangenen Jahren wurden bei der Entwicklung säure- und etchbeständiger Klarlackierungen für die Automobilserienlackierung große Fortschritte erzielt. In neuerer Zeit besteht nun vermehrt der Wunsch der Automobilindustrie nach kratzfesten Klarlackierungen, die gleichzeitig in den übrigen Eigenschaften das bisherige Eigenschaftsniveau beibehalten.

Aus der internationalen Patentanmeldung WO 98/40442 sind Beschichtungsstoffe bekannt, die zu kratzfesten Beschichtungen führen. Diese Beschichtungsstoffe weisen in ausgehärtetem Zustand ein Speichermodul E' von mindestens $10^7$ Pa auf. Die Beschichtungsstoffe enthalten als Bindemittel hydroxylfunktionelle (Meth)Acrylatcopolymerisate mit einer Hydroxylzahl von 100 bis 240 mg KOH/g, einer Säurezahl von 0 bis 35 mg KOH/, einem zahlenmittleren Molekulargewicht von 1.500 bis 10.000 Dalton und einer Glasübergangstemperatur von maximal 70 °C, besonders bevorzugt - 40 bis + 30 °C. Die hydroxyfunktionellen (Meth) Acrylatcopolymerisate sollen möglichst viele primäre Hydroxylgruppen enthalten. Besonders bevorzugt sind mindestens 50 bis 100% der vorhandenen Hydroxylgruppen primäre Hydroxylgruppen. Als Vernetzungsmittel werden Tris(alkoxycarbonylamino)triazin und/oder Polyisocyanate eingesetzt. Die Verwendung von Verbindungen, die mindestens eine Carbamatgruppe und mindestens eine Hydroxylgruppe enthalten, ist nicht beschrieben. Die aus den bekannten Beschichtungsstoffen hergestellten Beschichtungen weisen eine hohe Kratzfestigkeit, einen hohen Glanz, eine gute Chemikalienbeständigkeit und eine gute Wetterbeständigkeit auf. Die Etchbeständigkeit lässt dagegen zu wünschen übrig. Außerdem muss die Chemikalienbeständigkeit noch weiter verbessert werden, um den gestiegenen Ansprüchen des Marktes zu genügen.

Aus der europäischen Patentanmeldung EP 0 675 141 A1 ist ein Beschichtungsstoff bekannt, der als Bindemittel ein Methacrylatcopolymerisat eines zahlenmittleren Molekulargewichts von 3.071 Dalton mit primären Hydroxylgruppen und Carbamatgruppen sowie als Vernetzungsmittel ein Aminoplastharz enthält. Das Bindemittel ist vergleichsweise viskos, weswegen der Beschichtungsstoff vergleichsweise schlecht appliziert werden kann. Die hieraus hergestellte Beschichtung hat zwar einen hohen Glanz, ihre Etchbeständigkeit, Härte und Schlagzähigkeit lässt aber stark zu wünschen übrig.

Um das Eigenschaftsniveau dieses bekannten Beschichtungsstoffs und der hieraus hergestellten Beschichtung zu verbessern, wird in der EP 0 675 141 A1 vorgeschlagen, als Bindemittel (Meth)Acrylatcopolymerisate zu verwenden, die Carbamatgruppen und sterisch gehinderte sekundäre Hydroxylgruppen enthalten. Zwar können diese Bindemittel auch noch primäre Hydroxylgruppen enthalten. Wie sich indessen aus den Beispielen der europäischen Patentanmeldung entnehmen lässt, sind Bindemittel, die keine primären Hydroxylgruppen enthalten, bevorzugt. Diese Bindemittel haben eine vergleichsweise niedrige Viskosität, weswegen die betreffenden Beschichtungsstoffe besser appliziert werden können. Die hieraus hergestellten Beschichtungen weisen eine gute Chemikalienbeständigkeit, Etchbeständigkeit, Härte und Schlagzähigkeit sowie einen hohen Glanz auf. Angaben zur Kratzfestigkeit fehlen jedoch.

Aus der europäischen Patentanmeldung EP 0 915 113 A1 sind Beschichtungsstoffe bekannt, die als Bindemittel (i) Verbindungen, wie z:B. (Meth) Acrylatcopolymerisate , mit Hydroxylgruppen und Carbamatgruppen oder (ii) Verbindungen, wie z.B. (Meth) Acrylatcopolymerisate, mit Hydroxylgruppen und (iii) eine Verbindung mit Carbamatgruppen sowie als Vernetzungsmittel Polyisocyanate und Aminoplastharze enthalten.

Die (Meth)Acrylatcopolymerisate (ii) haben ein zahlenmittleres Molekulargewicht von 1.000 bis 40.000 und einer Glasübergangstemperatur von - 20 bis + 80 °C und enthalten vorzugsweise primäre Hydroxylgruppen (vgl. EP 0 915 113 A1, Seite 5, Zeilen 9 und 10, und Seite 6, Zeilen 10 bis 13).

Die Verbindungen (iii) mit Carbamatgruppen können auch Hydroxylgruppen enthalten, wobei das Verhältnis von Hydroxyl- zu Carbamatgruppen nicht genannt ist. Sie können somit auch als Bindemittel (i) eingesetzt werden. Ob - und wenn ja - inwieweit die hydroxylgruppenhaltigen Verbindungen (iii) auch in Kombination mit den (Meth)Acrylatcopolymerisaten (ii) verwendet werden könnten, geht aus der EP 0 915 113 A1 nicht hervor.

Gemäß den Beispielen der EP 0 915 113 A1 werden vorzugsweise (Meth)Acrylatcopolymerisate mit sekundären Hydroxylgruppen und Carbamatgruppen für sich allein als Bindemittel verwendet. So weist beispielsweise das Methacrylatcopolymerisat des Beispiels 1 ein Carbamatäquivalentgewicht CEW von 493 g/Äquivalent und ein Hydroxyäquivalentgewicht von 493 g/Äquivalent auf. Angaben zu zahlenmittlerem Molekulargewicht und Glasübergangstemperatur fehlen. Die mit Hilfe des Beschichtungsstoffs hergestellten Mehrschichtlackierungen weisen zwar eine gute Etchbeständigkeit auf, ihre Kratzfestigkeit lässt aber stark zu wünschen.

Aus dem europäische Patent EP 0 994 930 B1 sind Beschichtungsstoffe bekannt, die als Bindemittel

(Meth)Acrylatcopolymerisate mit primären und sekundären Hydroxylgruppen enthalten. Die (Meth)Acrylatcopolymerisate haben ein zahlenmittleres Molekulargewicht von 5.000 bis 25.000, ein Hydroxyäquivalentgewicht von 300 bis 800 g/Äquivalent und eine Glasübergangstemperatur von mindestens + 10 °C. Die (Meth)Acrylatcopolymerisate können auch noch eine nicht näher spezifizierte Anzahl von Carbamatgruppen enthalten. Die Kombination der carbamatgruppenfreien (Meth)Acrylatcopolymerisate mit carbamatgruppenhaltigen Verbindungen geht aus dem Patent ebensowenig hervor wie das Verhältnis von Hydroxyl- zu Carbamatgruppen. Als Vernetzungsmittel werden Aminoplastharze verwendet.

Die aus den bekannten Beschichtungsstoffen hergestellten Beschichtungen sollen einerseits die Dauerhaftigkeit, die Härte, den Glanz und den optischen Gesamteindruck (Appearance) aufweisen, wie sie die Beschichtungen üblicherweise haben, die aus Beschichtungsstoffen auf der Basis von hydroxylgruppenhaltiger (Meth)Acrylatcopolymerisaten und Aminoplastharzen hergestellt wurden, und andererseits die Etchbeständigkeit aufweisen, wie sie die Beschichtungen üblicherweise haben, die aus Beschichtungsstoffen auf Basis von Hydroxyl/Isocyanat-, Epoxy/Säure- und Carbamat/Aminoplast-Vernetzungssystemen hergestellt wurden. Die Kratzfestigkeit und die Chemikalienbeständigkeit, insbesondere die Beständigkeit gegenüber Kraftstoff, dieser bekannten Beschichtungen lässt aber nach wie vor sehr zu wünschen übrig.

Gemäß dem europäische Patent EP 1 042 402 B1 werden die Kratzfestigkeit und die Abriebfestigkeit der Beschichtungen, die aus den aus dem europäische Patent EP 0 994 930 B1 bekannten Beschichtungsstoffen hergestellten werden, dadurch verbessert, indem man den Beschichtungsstoffen als zusätzliche Vernetzungsmittel Tris(alkoxycarbonylamino)triazine (TACT) zusetzt. Indes erreichen die bekannten Beschichtungen nicht die Kratzfestigkeit, die erreicht werden muss, damit in der Praxis in Autowaschstraßen keine Beschädigung der Lackierungen der eintritt.

## Aufgabe der Erfindung

Der vorliegenden Erfindung liegt die Aufgabe zugrunde, Beschichtungsstoffe zur Verfügung zu stellen, die die Nachteile des Standes der Technik nicht mehr länger aufweisen, sondern die lagerstabil sind und sich leicht und problemlos applizieren lassen. Die neuen Beschichtungsstoffe sollen nach der Applikation und Aushärtung Beschichtungen liefern, die eine besonders hohe Kratzfestigkeit bei gleichzeitig sehr guter Chemikalien- und Etchbeständigkeit, insbesondere im Pankreatin-, Baumhar- und Benzintest, und sehr guter Appearance aufweisen. Nicht zuletzt sollen die neuen Beschichtungsstoffe zur Herstellung von Beschichtungen, Klebschichten und Dichtungen, vorzugsweise kratzfeste Beschichtungen, bevorzugt kratzfeste Klarlackierungen, insbesondere für kratzfeste Mehrschichtlackierungen für den Kraftfahrzeugsektor, geeignet sein.

## Die erfindungsgemäße Lösung

Demgemäß wurden die neuen Beschichtungsstoffe gefunden, enthaltend

(A) mindestens ein Hydroxylgruppen enthaltendes (Meth)Acrylat(co)polymerisat mit einer OH-Zahl von 100 bis 250 mg KOH/g, einer Säurezahl von 0 bis 35 mg KOH/g, einem zahlenmittleren Molekulargewicht $M_n$ von 1.200 bis 20.000 Dalton und einer Glasübergangstemperatur von maximal +70°C,

(B) mindestens eine Carbamatgruppen und Hydroxylgruppen enthaltende Verbindung mit einer Hydroxylzahl von 10 bis 150 mg KOH/g , einem Carbamatäquivalentgewicht CEW von 250 bis 700 g/Äquivalent und einem Äquivalentverhältnis von Hydroxyl- zu Carbamatgruppen von 1:20 bis 1:0,5 und

(C) mindestens ein Aminoplastharz;

wobei

(I) mindestens 10 Äquivalent-% der in den (Meth) Acrylat(co)polymerisaten (A) und/oder den Verbindungen (B) enthaltenen Hydroxylgruppen primäre Hydroxylgruppen sind und wobei

(II) die Beschichtungsstoffe nach ihrer Aushärtung ein Speichermodul E' im gummielastischen Bereich von mindestens $1{,}5*10^7$ Pa aufweisen, wobei das Speichermodul E' mit der Dynamisch-Mechanischen-Thermo-Analyse (DMTA) an homogenen freien Filmen einer Schichtdicke von $40 \pm 10$ µm gemessen worden sind.

Im Folgenden werden die neuen Beschichtungsstoffe als »erfindungsgemäße Beschichtungsstoffe« bezeichnet.

Außerdem wurde das neue Verfahren zur Herstellung von Beschichtungsstoffen gefunden, bei dem man

(A) mindestens ein Hydroxylgruppen enthaltendes (Meth)Acrylat(co)polymerisat,

(B) mindestens eine Carbamatgruppen und Hydroxylgruppen enthaltende Verbindung und

(C) mindestens ein Aminoplastharz,

miteinander vermischt und die resultierende Mischung homogenisiert, wobei die Bestandteile der Beschichtungsstoffe so ausgewählt werden, dass

(I) mindestens 10 Äquivalent-% der in den (Meth)Acrylat(co)polymerisaten (A) und den Verbindungen (B) enthaltenen Hydroxylgruppen primäre Hydroxylgruppen sind und dass

(II) die Beschichtungsstoffe nach ihrer Aushärtung ein Speichermodul E' im gummielastischen Bereich von mindestens 1,5*$10^7$ Pa aufweisen, wobei das Speichermodul E' mit der Dynamisch-Mechanischen-Thermo-Analyse an homogenen freien Filmen einer Schichtdicke von 40 $\pm$ 10 $\mu$m gemessen worden sind.

Im Folgenden wird das neue Verfahren zur Herstellung von Beschichtungsstoffen als »erfindungsgemäßes Verfahren« bezeichnet.

Weitere Erfindungsgegenstände gehen aus der Beschreibung hervor.

**Die Vorteile der Erfindung**

Im Hinblick auf den Stand der Technik war es überraschend und für den Fachmann nicht vorhersehbar, dass sich die Aufgabe, die der vorliegenden Erfindung zu Grunde lag, mit Hilfe der erfindungsgemäßen Beschichtungsstoffe und des erfindungsgemäßen Verfahrens gelöst werden konnte.

Insbesondere war es überraschend, dass die erfindungsgemäßen Beschichtungsstoffe Beschichtungen, insbesondere Klarlackierungen für Mehrschichtlackierungen von Kraftfahrzeugkarosserien, lieferten, die sich gleichzeitig durch eine hohe Kratzfestigkeit und durch eine hohe Beständigkeit gegenüber Pankreatin, Baumharz und Benzin, insbesondere FAM-Prüfkraftstoff (50 Vol.-% Toluol, 30 Vol.-% Isooctan, 15 Vol.-% Diisobutylen, 5 Vol.-% Ethanol) auszeichneten. Der sogenannte FAM-Test wird dabei gemäß VDA Prüfblatt 621-412 (Grundlage DIN-Norm 53 168) durchgeführt.

Außerdem war es überraschend, dass sich die erfindungsgemäßen Beschichtungsstoffe als Klebstoffe und Dichtungsmassen für die Herstellung von Klebschichten und Dichtungen sowie als Ausgangsprodukte für die Herstellung von freitragenden Folien und Formteilen eigneten.

Die erfindungsgemäßen Klebschichten, Dichtungen, Folien und Formteilen ebenfalls hervorragende anwendungstechnische Eigenschaften auf.

**Ausführliche Beschreibung der Erfindung**

Es ist erfindungswesentlich, dass das Beschichtungsstoffe bzw. deren Bestandteile so ausgewählt werden, dass das ausgehärtete Beschichtungsstoffe im gummielastischen Bereich ein Speichermodul E', d.h. einen bei der Deformation eines viskoelastischen Materials wie z.B. eines Polymers wieder zurückzugewinnende Energieanteil (elastischer Anteil), von mindestens 1,5*$10^7$ Pa, bevorzugt von mindestens 5*$10^7$ Pa, besonders bevorzugt von mindestens 8*$10^7$ Pa, ganz besonders bevorzugt von mindestens 10*$10^7$ Pa und insbesondere bevorzugt von mindestens 14*$10^7$ Pa aufweist, wobei das Speichermodul E' mit der Dynamisch-Mechanischen-Thermo-Analyse (DMTA) an homogenen freien Filmen mit einer Schichtdicke von 40 $\pm$ 10 $\mu$m gemessen worden ist.

Die DMTA ist eine allgemein bekannte Meßmethode zur Bestimmung der viskoelastischen Eigenschaften von Beschichtungen und beispielsweise beschrieben in Murayama, T., Dynamic Mechanical Analysis of Polymeric Materials, Elsevier, New York, 1978 und Loren W. Hill, Joumal of Coatings Technology, Vol. 64, No. 808, May 1992, Seiten 31 bis 33. Die Verfahrensbedingungen werden von Th. Frey, K.-H. Große Brinkhaus und U. Röckrath in Cure Monitoring Of Thermoset Coatings, Progress In Organic Coatings 27 (1996), 59-66, oder in der deutschen Patentanmeldung DE 44 09 715 A1 oder dem deutschen Patent DE 197 09 467 C2 im Detail beschrieben.

Der Speichermodul E' wird an homogenen freien Filmen gemessen. Die freien Filme werden in bekannter Weise dadurch hergestellt, dass der betreffende Beschichtungsstoff auf Substrate appliziert und gehärtet wird, auf denen die hieraus hergestellte Beschichtung nicht haftet. Als Beispiele für geeignete Substrate seien Glas, Teflon und insbesondere Polypropylen genannt. Polypropylen weist dabei den Vorteil einer guten Verfügbarkeit auf und wird daher normalerweise als Trägermaterial eingesetzt. Vorzugsweise werden die folgenden Bedingungen angewandt: Tensile mode ; Amplitude: 0,2%; Frequenz: 1 Hz; Temperatur-Rampe: 1 °C/min von Raumtemperatur bis 200°C. Die Durchführung der Messungen kann beispielsweise mit den Geräten MK II, MK III oder MK IV der Firma Rheometric-Scientific erfolgen.

Die spezielle Auswahl der Beschichtungsstoffe über den Wert des Speichermoduls E' im gummielastischen Bereich bei 20°C der ausgehärteten Beschichtungsstoffe ermöglicht dabei in einfacher Weise die Bereitstellung von Beschichtungsstoffen mit der gewünschten guten Kratzfestigkeit, da die Kenngröße durch einfache DMTA-Messungen bestimmbar ist.

Der bei einer Deformation des viskoelastischen Materials wird der bei diesem Vorgang aufgezehrte (dissipierte) Energieanteil durch die Größe des Verlustmoduls E" beschrieben wird. Das Verlustmodul E" ist ebenfalls von der Deformationsgeschwindigkeit und der Temperatur abhängig. Der Verlustfaktor tan$\delta$ ist definiert als der Quotient aus dem Verlustmodul E" und dem Speichermodul E'. tan$\delta$ lässt sich gleichfalls mit Hilfe der DMTA bestimmen und stellt ein Maß für das Verhältnis zwischen den elastischen und plastischen Eigenschaften des Films dar. Der Verlustfaktor tan$\delta$ kann variieren; vorzugsweise liegt er bei 20 °C bei maximal 0,10, bevorzugt maximal 0,06.

Der Wert des Speichermoduls E' ist dabei über die Auswahl der Bindemittel und Vernetzungsmittel steuerbar.

So ist beispielsweise der Speichermodul umso

höher, je höher die Hydroxylzahl der nachstehen beschriebenen Bindemittel (A) und (B) insgesamt und je niedriger das Carbamatäquivalentgewicht CEW der Komponente (B) sind und je höher der Anteil an primären Hydroxylgruppen in den nachstehend beschriebenen Bindemitteln (A) und (B) ist.

Die erfindungsgemäßen Beschichtungsstoffe enthalten mindestens ein hydroxylgruppenhaltiges (Meth)Acrylat(co)polymerisat (A) mit einer Hydroxylzahl von 100 bis 250, bevorzugt 160 bis 220 und besonders bevorzugt 170 bis 200 mg KOH/g, einer Säurezahl von 0 bis 35 und bevorzugt 0 bis 25 mg KOH/g, einer Glasübergangstemperatur von maximal +70°C und bevorzugt - 40°C bis + 70°C sowie einem zahlenmittleren Molekulargewicht von 1.200 bis 20.000, bevorzugt von 1500 bis 15000 und besonders bevorzugt von 1500 bis 10000 Dalton. Wesentlich ist, dass der Hydroxygehalt des (Meth)Acrylat(co)polymerisats (A) bzw. (B) so gewählt wird, dass mindestens 10%, bevorzugt mindestens 15% und besonders bevorzugt mindestens 20 Äquivalent-%, der in (A) und/oder (B) enthaltenen Hydroxylgruppen primäre Hydroxylgruppen sind. Besonders bevorzugt kommen dabei die primären Hydroxylgruppen überwiegend, insbesondere im wesentlichen vollständig, aus der Komponente (A). Prinzipiell sind dabei alle (Meth)Acrylat(co)polymerisate (A) mit den angegebenen Kennzahlen (Hydroxylzahl, Säurezahl, Glasübergangstemperatur und zahlenmittleres Molekulargewicht) geeignet, sofern sie nach Vernetzung zu Beschichtungen mit den angegebenen viskoelastischen Kenngrößen führen.

Die Glasübergangstemperatur kann dabei vom Fachmann unter Zuhilfenahme der Formel

$$\frac{1}{T_g} = \sum_{1}^{i} \frac{W_i}{T_{g,i}}$$

$T_g$ = Glasübergangstemperatur des Polymeren
i = Anzahl der verschiedenen einpolymerisierten Monomere,
$W_i$ = Gewichtsanteil des i-ten Monomers
$T_{gi}$ = Glasübergangstemperatur des Homopolymers aus dem i-ten Monomer

näherungsweise berechnet werden.

Zur Herstellung der Beschichtungsstoffe werden beispielsweise Methacrylatcopolymerisate (A1) eingesetzt, die erhältlich sind, indem

(a1) 10 bis 51 Gew.-%, bevorzugt 20 bis 45 Gew.-%, 4-Hydroxy-n-butylacrylat oder 4-Hydroxy-n-butylmethacrylat oder eine Mischung aus 4-Hydroxy-n-butylacrylat und 4-Hydroxy-n-butylmethacrylat,

(b1) 0 bis 36 Gew.-%, bevorzugt 0 bis 20 Gew.-% eines von (a1) verschiedenen hydroxylgruppenhaltigen Esters der Acrylsäure oder eines hydroxylgruppenhaltigen Esters der Methacrylsäure oder eines Gemisches aus solchen Monomeren,

(c1) 28 bis 58 Gew.-%, bevorzugt 34 bis 50 Gew.-%, eines von (a1) und (b1) verschiedenen aliphatischen oder cycloaliphatischen Esters der (Meth) acrylsäure mit mindestens 4 Kohlenstoffatomen im Alkoholrest oder eines Gemisches aus solchen Monomeren,

(d1) 0 bis 3 Gew.-%, bevorzugt 0 bis 2 Gew.-%, einer ethylenisch ungesättigten Carbonsäure oder einer Mischung aus ethylenisch ungesättigten Carbonsäuren und

(e1) 0 bis 40 Gew.-%, bevorzugt 5 bis 35 Gew.-%, eines Vinylaromaten und/oder eines von (a1), (b1), (c1) und (d1) verschiedenen ethylenisch ungesättigten Monomeren oder eines Gemisches aus solchen Monomeren

copolymerisiert werden, wobei die Summe der Gewichtsanteile der Komponenten (a1), (b1), (c1), (d1) und (e1) stets 100 Gew.-% ergibt.

Die bevorzugte Glasübergangstemperatur dieses Methacrylatcopolymerisats (A1) beträgt von -40 bis + 70°C.

Zur Herstellung der Beschichtungsstoffe werden auch beispielsweise Methacrylatcopolymerisate (A2) verwendet, die erhältlich sind, indem

(a2) 10 bis 51 Gew.-%, bevorzugt 20 bis 45 Gew.-%, eines hydroxylgruppenhaltigen Methacrylsäureesters, bevorzugt Hydroxypropylmethacrylat oder Hydroxyethylmethacrylat, oder eines Gemisches aus solchen Monomeren, bevorzugt eines Gemisches aus Hydroxypropylmethacrylat und Hydroxyethylmethacrylat,

(b2) 0 bis 36 Gew.-%, bevorzugt 0 bis 20 Gew.-%, eines von (a2) verschiedenen hydroxylgruppenhaltigen Esters der Acrylsäure oder eines hydroxylgruppenhaltigen Esters der Methacrylsäure oder eines Gemisches aus solchen Monomeren,

(c2) 28 bis 58 Gew.-%, bevorzugt 34 bis 50 Gew.-%, eines von (a2) und (b2) verschiedenen aliphatischen oder cycloaliphatischen Esters der (Meth) acrylsäure mit mindestens 4 Kohlenstoffatomen im Alkoholrest oder eines Gemisches aus solchen Monomeren,

(d2) 0 bis 3 Gew.-%, bevorzugt 0 bis 2 Gew.-%, einer ethylenisch ungesättigten Carbonsäure oder einer Mischung aus ethylenisch ungesättigten Carbonsäuren und

(e2) 0 bis 40, bevorzugt 5 bis 35 Gew.-% Vinylaromaten und/oder eines von (a2), (b2), (c2) und (d2) verschiedenen ethylenisch ungesättigten Monomeren oder eines Gemisches aus solchen Monomeren

copolymerisiert werden, wobei die Summe der Gewichtsanteile der Komponenten (a2), (b2), (c2), (d2) und (e2) stets 100 Gew.-% ergibt.

Die bevorzugte Glasübergangstemperatur dieses Methacrylatcopolymerisats (A2) beträgt von -40 bis + 70°C.

Die Herstellung der erfindungsgemäß bevorzugt eingesetzten (Meth)Acrylat(co)polymerisate (A), insbesondere der Methacrylatcopolymerisate (A1) und (A2), kann nach allgemein gut bekannten Polymerisationsverfahren erfolgen. Polymerisationsverfahren zur Herstellung von Polyacrylatharzen sind allgemein bekannt und vielfach beschrieben (vgl. z.B.: Houben-Weyl, Methoden der organischen Chemie, 4. Auflage, Band 14/1, Seite 24 bis 255 (1961)).

Die erfindungsgemäß bevorzugt eingesetzten (Meth)Acrylat(co)polymerisate (A) werden insbesondere mit Hilfe des Lösungspolymerisationsverfahrens hergestellt. Hierbei wird üblicherweise ein organisches Lösemittel bzw. Lösemittelgemisch vorgelegt und zum Sieden erhitzt. In dieses organische Lösemittel bzw. Lösemittelgemisch werden dann das zu polymerisierende Monomerengemisch sowie ein oder mehrere Polymerisationsinitiatoren kontinuierlich zugegeben. Die Polymerisation erfolgt bei Temperaturen zwischen 100 und 160 °C, bevorzugt zwischen 130 und 150 °C. Als Polymerisationsinitiatoren werden vorzugsweise freie Radikale bildende Initiatoren eingesetzt. Initiatorart und -menge werden üblicherweise so gewählt, dass bei der Polymerisationstemperatur während der Zulaufphase ein möglichst konstantes Radikalangebot vorliegt.

Als Beispiele für einsetzbare Initiatoren werden genannt: Dialkylperoxide, wie Di-tert.-Butylperoxid, Dicumylperoxid; Hydroperoxide, wie Cumolhydroperoxid, tert.-Butylhydroperoxid; Perester, wie tert.-Butylperbenzoat, tert.-Butylperpivalat, tert.-Butylper-2-ethylhexanoat; Bisazoverbindungen wie Azobisisobutyronitril.

Die Polymerisationsbedingungen (Reaktionstemperatur, Zulaufzeit der Monomerenmischung, Menge und Art der organischen Lösemittel und Polymerisationsinitiatoren, eventuelle Mitverwendung von Molekulargewichtsreglern, wie z.B. Mercaptanen, Thiolglykolsäureestern und Chlorwasserstoffen) werden so ausgewählt, dass die bevorzugt eingesetzten Polyacrylatharze ein zahlenmittleres Molekulargewicht von 1.200 bis 20.000, bevorzugt 1.500 bis 15.000, besonders bevorzugt 1.500 bis 10.000 Dalton (bestimmt durch Gelpermeationschromatographie unter Verwendung eines Polystyrolstandards) aufweisen.

Die Säurezahl der erfindungsgemäß eingesetzten (Meth)Acrylat(co)polymerisate (A) kann vom Fachmann durch Einsatz entsprechender Mengen carboxylgruppenfunktioneller Monomere eingestellt werden. Analoges gilt für die Einstellung der Hydroxylzahl. Sie ist über die Menge an eingesetzter Menge hydroxylgruppenfunktioneller Monomere steuerbar.

Als Komponente (a1) kann 4-Hydroxy-n-butylacrylat, 4-Hydroxy-n-butylmethacrylat oder eine Mischung aus 4-Hydroxy-n-butylacrylat und 4-Hydroxy-n-butylmethacrylat eingesetzt werden. Als Komponente (a1) wird in einer bevorzugten Ausführungsform 4-Hydroxy-n-butylacrylat eingesetzt.

Als Komponente (a2) können Hydroxyalkylester der Methacrylsäure, insbesondere solche in denen die Hydroxyalkylgruppe bis zu 8, bevorzugt bis zu 6 und besonders bevorzugt bis zu 4 Kohlenstoffatome enthält, oder Mischungen aus diesen Hydroxyalkylestern eingesetzt Als Beispiele für derartige Hydroxyalkylester werden 2-Hydroxypropylmethacrylat, 3-Hydroxypropyl-methacrylat und 2-Hydroxyethylmethacrylat genannt.

Als Komponente (b1) bzw. (b2) kann im Prinzip jeder von (a1) bzw. (a2) verschiedene hydroxylgruppenhaltige Ester der Acrylsäure oder Methacrylsäure oder ein Gemisch aus solchen Monomeren eingesetzt werden. Als Beispiele für (b1) bzw. (b2) werden genannt: Hydroxyalkylester der Acrylsäure, wie z.B. 2-Hydroxyethylacrylat, 2-Hydroxy-propylacrylat, 3-Hydroxypropylacrylat oder 3-Hydroxybutylacrylat und Hydroxyalkylester der Methacrylsäure, wie z.B. Hydroxyethylmethacrylat und Hydroxypropylmethacrylat, sowie die Veresterungsprodukte von Hydroxyalkyl(meth)acrylaten mit einem oder mehreren Molekülen -Caprolacton. Geeignet sind ferner Umsetzungsprodukte von Acryl- bzw. Methacrylsäure mit einem Glycidylester. Glycidylester können durch Reaktion einer monofunktionellen Carbonsäure (z.B. Octansäure, Benzoesäure, Benzilsäure, Cydohexansäure) mit einem Epihalohydrin (z.B. Epichlorohydrin) unter den bekannten Reaktionsbedingungen erhalten werden. Glycidylester sind kommerziell erhältlich, z.B. als Cardura® E der Firma Shell, Glydexx® N-10 der Firma Exxon oder Araldit® PT910 der Firma Ciba. Glycidylester lassen sich durch folgende Formel darstellen:

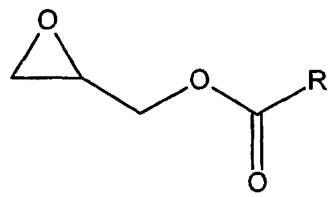

worin R ein substituierter oder unsubstituierter Kohlenwasserstoffrest mit 1 bis 40, bevorzugt 1 bis 20 und besonders bevorzugt 1 bis 12, Kohlenstoffatomen ist. Polyglycidylester können ebenfalls verwendet werden und sind herstellbar durch Reaktion einer polyfunktionellen Carbonsäure (z.B. Phthalsäure, Thioglykolsäure, Adipinsäure) mit einem Epihalohydrin. Polyglycidylester könne ebenfalls durch die obige Formel dargestellt werden. In diesem Falle ist R mit einer oder mehreren Glycidylestergruppen substituiert. Bevorzugt werden dabei die Handelsprodukte verwendet, die unter der Marke Cardura®, Glydexx® bzw. Araldit® vertrieben werden.

Als Komponente (c1) bzw. (c2) kann im Prinzip jeder von (a1) bzw. (a2) und (b1) bzw. (b2) verschiedene aliphatische oder cycloaliphatische Ester der (Meth) acrylsäure mit mindestens 4 Kohlenstoffatomen im Alkoholrest oder ein Gemisch aus solchen Monomeren eingesetzt werden. Als Beispiele werden genannt: aliphatische Ester der (Meth)acrylsäure mit 4 bis 20 Kohlenstoffatomen im Alkoholrest, wie z.B. n-Butyl-, iso-Butyl-, tert.-Butyl, 2-Ethylhexyl-, Stearyl- und Laurylmethacrylat und cycloaliphatische Ester der (Meth)acrylsäure wie z. B. Cyclohexylmethacrylat.

Als Komponente (d1) bzw. (d2) kann im Prinzip jede ethylenisch ungesättigte Carbonsäure oder eine Mischung aus ethylenisch ungesättigten Carbonsäuren eingesetzt werden. Als Komponente (d1) bzw. (d2) werden vorzugsweise Acrylsäure und/oder Methacrylsäure eingesetzt.

Als Komponente (e1) bzw. (e2) kann im Prinzip jedes von (a1) bzw. (a2), (b1) bzw. (b2), (c1) bzw. (c2) und (d1) bzw. (d2) verschiedene ethylenisch ungesättigte Monomer oder ein Gemisch aus solchen Monomeren eingesetzt werden. Als Beispiele für Monomere, die als Komponente (e1) bzw. (e2) eingesetzt werden können, werden genannt: vinylaromatische Kohlenwasserstoffe, wie Styrol, $\alpha$-Alkylstyrol und Vinyltoluol, Amide der Acrylsäure und Methacrylsäure, wie z.B. Methacrylamid und Acrylamid; Nitrile der Methacrylsäure und Acrylsäure; Vinylether und Vinylester. Als Komponente (e) werden vorzugsweise vinylaromatische Kohlenwasserstoffe, insbesondere Styrol eingesetzt.

Die erfindungsgemäßen Beschichtungsstoffe enthalten mindestens eine Carbamatgruppen und Hydroxylgruppen tragende Verbindung B).

Die Verbindung B) weist eine Hydroxylzahl von 10 bis 150, bevorzugt 15 bis 120 und besonders bevorzugt 20 bis 100 und ein Carbamatäquivalentgewicht CEW von 250 bis 700, bevorzugt 300 bis 600, besonders bevorzugt von 350 bis 500 und ganz besonders bevorzugt von 360 bis 450 auf.

Das Verhältnis von Hydroxylgruppen zu Carbamatgruppen in der Verbindung B) beträgt dabei von 1: 20 bis 1:0,5, bevorzugt von 1:15 bis 1:0,8 und besonders bevorzugt von 1:10 bis 1:1.

Carbamatgruppen können auf verschiedenen Wegen erhalten werden. Es ist z.B. möglich, zyklische Carbonatgruppen, Epoxygruppen und ungesättigte Bindungen zu Carbamaten umzusetzen.

Cyclische Carbonatgruppen können zu Carbamatgruppen umgesetzt werden, indem man sie mit Ammoniak oder primären Aminen reagieren läßt, wodurch der Ring der cyclischen Carbonatgruppe geöffnet und ein $\beta$-Hydroxycarbamat gebildet wird.

Epoxygruppen können in Carbamatgruppen umgewandelt werden, indem sie zunächst mit $CO_2$ zu einem zyklischen Carbonat umgesetzt werden, wonach dann die weitere Umsetzung wie oben geschildert erfolgen kann. Die Reaktion mit $CO_2$ kann bei Drücken zwischen Atmosphärendruck und superkritischem $CO_2$ erfolgen, wobei es bevorzugt ist, die Reaktion bei erhöhtem Druck (z.B. 400 bis 1050 kPa) durchzuführen. Die Temperatur zur Durchführung dieser Reaktion beträgt dabei bevorzugt zwischen 60 und 150°C. Katalysatoren, die bei der Durchführung dieser Reaktion eingesetzt werden können sind solche, die einen Oxiran-Ring aktivieren, wie tertiäre Amine oder quaternäre Salze (z.B. Tetramethylammoniumbromid), Kombinationen von komplexen Organozinnhaliden und Alkylphosphoniumhalide (z.B. $(CH_3)_3SnI$, $(C_4H_9)_3SnI$, $Bu_4PI$ und $(CH_3)_4PI$), Kaliumsalze (z.B. $K_2CO_3$, KI), bevorzugt in Kombination mit Kronenethern, Zinnoctoat, Calziumoctoat u.ä.

Ungesättigte Bindungen können zu Carbamaten umgesetzt werden, indem sie zunächst mit Peroxid zu Epoxiden, dann mit $CO_2$ zu zyklischen Carbamaten und anschließend mit Ammoniak oder primären Aminen zu Carbamaten umgesetzt werden.

Das Carbamat kann primär, also in einer $NH_2$-Gruppe endend oder sekundär, also in einer NHR-Gruppe, wobei R ein organischer Rest ist, endend, sein. In einer bevorzugten Ausführungsform ist das Carbamat primär.

Ein weiterer Weg, um Verbindungen (B) zu erhalten ist es, einen Alkohol (wobei Alkohol eine Verbindung ist, die eine oder mehrere Hydroxylgruppen trägt) mit mehr als einer Harnstoffverbindung umzusetzen, um eine Carbamatgruppen tragende Verbindung zu erhalten. Diese Reaktion wird unter Erhitzen einer Mischung von Alkohol und Harnstoff durchgeführt. Bevorzugt ist es dabei, ein Katalysator zuzugeben.

Eine weitere Möglichkeit ist die Reaktion eines Alkohols mit Cyansäure (HOCN), um eine Verbindung mit primären Carbamatgruppen zu erzeugen.

Carbamate können ebenfalls durch Reaktion eines Alkohols mit Phosgen und dann folgender Umsetzung mit Ammoniak erhalten werden, wobei Verbindungen mit primären Carbamatgruppen resultieren, oder sie können durch Reaktion eines Alkohols mit Phosgen und anschließender Umsetzung mit einem primären Amin erhalten werden, wobei Verbindungen mit sekundären Carbamatgruppen resultieren.

Ein weiterer Weg ist es, ein Isocyanat (z.B. HDI, IPDI) mit einer Verbindung wie Hydroxypropylcarbamat umzusetzen, wodurch ein Carbamat-blockiertes Isocyanatderivat-resultiert.

Die Einführung der Carbamatgruppe in die Verbindung B) kann, wenn die Verbindung B) ein Polymer ist, auch durch den Einbau von Monomeren, welche Carbamatgruppen enthalten, erfolgen. Beispiele geeigneter Monomere dieser Art sind ethylenisch ungesättigte Monomere, welche eine Carbamatgruppe enthalten. Eine Möglichkeit ist es, ein (meth)acrylisches Monomer, das eine Carbamatfunktion in dem Esterteil des Monomers aufweist, herzustellen. Solche Monomere sind bekannt und z.B. in den amerikanischen Patenten US

3,479,328 A, US 3,674,838 A, US 4,126,747 A, US 4,279,833 A und US 4,340,497 A beschrieben.

Weitere Methoden, die Monomere zu erhalten sind dem Fachmann bekannt und können ebenfalls Anwendung finden.

Das acrylische Monomer kann dann, gegebenenfalls mit anderen ethylenisch ungesättigten Monomeren, nach allgemein bekannten Methoden (co)polymerisiert werden.

Die Einführung der Carbamatgruppe kann aber auch durch polymeranaloge Reaktionen in die Verbindung (B) erfolgen. Beispiele geeigneter Methoden dieser Art sind aus den Patentschriften US 4,758,632 A, US 4,301,257 A oder US 2,979,514 A bekannt.

Eine Möglichkeit, auf polymeranalogem Wege carbamatfunktionelle Polymere herzustellen ist, Harnstoff in Anwesenheit eines hydroxylfunktionellen (Meth) Acrylat(co)polymers thermisch zu spalten (um Ammoniak und HNCO freizusetzen), woraus dann ein carbamatfunktionelles (Meth)Acrylat(co)polymer resultiert.

Ebenfalls möglich ist es, die Hydroxylgruppe eines Hydroxyalkylcarbamats mit der Isocyanatgruppe eines isocyanatfunktionellen acrylischen oder vinylischen Monomers umzusetzen, um eine carbamatfunktionelle Komponente zu erhalten. Isocyanatfunktionelle (Meth) acrylate sind bekannt und werden z.B. in der US 4,301,257 A beschrieben. Isocyanatfunktionelle Vinylmonomere sind ebenfalls bekannt und beinhalten olefinisch ungesättigtes m-Tetramethylxylolisocyanat (unter der Bezeichnung TMI® von American Cyanamid erhältlich).

Noch eine weitere Möglichkeit ist, cyclische Carbonatgruppen von einem solche Gruppen enthaltenden Polymer mit Ammoniak umzusetzen um ein Carbamatgruppen enthaltendes Polymer zu bilden. Zyklische Carbonatgruppen enthaltende Polymere sind ebenfalls bekannt und werden z.B. in der US 2,979,514 A beschrieben.

Ein etwas komplizierterer aber ebenfalls möglicher Weg zur Herstellung Carbamatgruppen enthaltender Polymere ist die Umesterung eines (Meth)Acrylat(co) polymers mit einem Hydroxyalkylcarbamat.

Denkbar ist auch die Herstellung der Verbindungen (B) durch die Umsetzung hydroxylgruppenhaltiger Polymere mit Phosgen und nachfolgend mit Ammoniak, wie z.B. in DE 199 46 048 oder DE 101 29 969 beschrieben.

Ein bevorzugter Weg ist jedoch, ein bereits vorhandenes Polymer, wie z.B. ein (Meth)Acrylat(co)polymerisat, mit einer anderen Komponente umzusetzen, um eine Carbamatgruppe an das bestehende Polymerrückgrat anzuhängen, wie dies z.B. in US 4,758,632 A beschrieben ist.

Bevorzugt können Carbamate durch polymeranaloge Transcarbamatisierung erhalten werden. Hierbei läßt man einen Alkohol mit einem Alkylcarbamat (z.B. Methylcarbamat, Ethylcarbamat, Butylcarbamat) reagieren und erhält eine primäre Carbamatgruppen enthaltende Verbindung. Diese Reaktion wird in der Hitze, bevorzugt in Gegenwart eines Katalysators, wie organometallischen Katalysatoren (z.B. Dibutylzinndilaurat), durchgeführt.

Weitere Möglichkeiten zur Darstellung von Carbamaten sind dem Fachmann bekannt und werden z.B. in P. Adams F. Baron, »Esters of Carbamic Acid«, Chemical Review, v. 65, 1965 beschrieben.

Bei der Herstellung dieser Verbindungen (B) ist, z.B. bei einer nachträglichen Einführung der Carbamatgruppe, darauf zu achten, dass sowohl Hydroxylgruppen als auch Carbamatgruppen in der endgültigen Verbindung B) in ausreichender Zahl vorliegen.

Die Verbindung (B) ist bevorzugt polymer.

Geeignete Polymere (B) entstammen den Polymerklassen der statistisch, alternierend und/oder blockartig aufgebauten linearen und/oder verzweigten und/oder kammartig aufgebauten (Co)Polymerisate von ethylenisch ungesättigten Monomeren, oder Polyadditionsharze und/oder Polykondensationsharze. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation « und »Polykondensationsharze« verwiesen.

Beispiele gut geeigneter (Co)Polymerisate (B) sind (Meth)Acrylat(co)polymerisate und partiell verseifte Polyvinylester, insbesondere (Meth)Acrylat(co)polymerisate.

Beispiele gut geeigneter Polyadditionsharze und/oder Polykondensationsharze (B) sind Polyester, Alkyde, Polyurethane, Polylactone, Polycarbonate, Polyether, Epoxidharz-Amin-Addukte, Polysiloxane, Polyharnstoffe, Polyamide oder Polyimide, insbesondere Polyester.

Ganz besonders bevorzugt entstammen die Polymeren (B) den Polymerklassen der (Meth)acrylat (co)polymerisate.

Verfahren zur Herstellung der Carbamatgruppen enthaltenden Polymere (B), die den vorstehend genannten Polymerklassen entstammen sind aus den Patentanmeldungen

- EP 0 675 141 B 1, Seite 2, Zeile 44, bis Seite 5, Zeile 15, Seite 8, Zeile 5, bis Seite 10, Zeile 41,
- EP 0 915 113 A 1, Example 1, Seite 11, Zeilen 3 bis 15, bekannt.

Bevorzugt werden die Polymeren (B) hergestellt, indem man ein Monomerengemisch, das mindestens eine olefinisch ungesättigte Carbonsäure, beispielsweise Methacrylsäure, enthält, in der Gegenwart eines Glycidylesters der Versatic®-Säure (vgl. Römpp Lexikon Lacke und Druckfarben, Georg Thieme Verlag, Stuttgart New York, 1998 »Versatic®-Säuren«, Seiten 605 und 606) copolymerisiert, wonach man das

resultierende hydroxylgruppenhaltige (Meth)Acrylat(co)polymerisat mit mindestens einem Alkylcarbamat, wie Methyl-, Propyl- oder Butylcarbamat umsetzt.

Denkbar als Verbindung (B) ist auch ein (Meth)Acrylatcopolymerisat (B1), das erhältlich ist, indem

(a) 10 bis 50, bevorzugt 10 bis 40 Gew.-% , besonders bevorzugt 20 bis 30 Gew.-%, eines hydroxylgruppenhaltigen (Meth)acrylsäureesters oder eines Gemisches aus solchen Monomeren,

(b) 0 bis 50 Gew.-%, bevorzugt 10 bis 40 Gew.-%, eines mindestens eine Carbamatgruppe enthaltenden Monomeren, wobei die Carbamatgruppe ein Umsetzungsprodukt aus einem Epoxid und einer Säure mit anschließender Reaktion der resultierenden Hydroxylgruppe zu Carbamat ist, oder eines Gemisches aus solchen Monomeren,

(c) 5 bis 58 Gew.-%, bevorzugt 5 bis 45 Gew.-%, eines von (a) und (b) verschiedenen aliphatischen oder cycloaliphatischen Esters der (Meth)acrylsäure mit mindestens 4 Kohlenstoffatomen, bevorzugt mindestens 6 Kohlenstoffatomen, im Alkoholrest oder eines Gemisches aus solchen Monomeren,

(d) 0 bis 3 Gew.-%, bevorzugt 0 bis 2 Gew.-%, einer ethylenisch ungesättigten Carbonsäure oder einer Mischung aus ethylenisch ungesättigten Carbonsäuren und

(e) 0 bis 40 Gew.-%, bevorzugt 5 bis 35 Gew.-%, eines von (a), (b), (c) und (d) verschiedenen ethylenisch ungesättigten Monomeren oder eines Gemisches aus solchen Monomeren copolymerisiert werden, wobei die Summe der Gewichtsanteile der Komponenten (a), (b), (c), (d) und (e) stets 100 Gew.-% ergibt.

Bevorzugt liegt das Äquivalentverhältnis von Hydroxylgruppen zu Carbamatgruppen enthaltendem Monomeren in diesem (Meth)Acrylatcopolymerisat (B1) bei 1:0,5 bis 1:0,9.

Die Komponenten (a), (c), (d) und (e) entsprechen dabei den oben für die (Meth)Acrylat(co)polymerisate (A) schon beschriebenen Komponenten.

Die Komponente (b) ist ein mindestens eine Carbamatgruppe enthaltendes Monomer, wobei die Carbamatgruppe ein Umsetzungsprodukt aus einem Epoxid und einer acrylisch ungesättigten Säure mit anschließender Reaktion der resultierenden Hydroxylgruppe zu Carbamat ist, oder ein Gemisch aus solchen Monomeren.

Alternativ ist es bevorzugt, ein (Meth)Acrylat(co)polymerisat (B) aus den Komponenten (a) bis (e) herzustellen, bei dem die Komponente

(b) 0 bis 50 Gew.-%, bevorzugt 10 bis 40 Gew.-%, eines Monomeren, das ein Umsetzungsprodukt aus einem Epoxid und einer Säure ist.

und dann bei dem resultierenden (Meth)Acrylat(co)polymerisat die Hydroxylgruppe, die aus der Reaktion von einem Epoxid und einer Säure der Komponente (b) resultiert, mit einem Alkylcarbamat umgesetzt wird.

Bevorzugt ist es, wenn als Alkylcarbamat Methylcarbamat verwendet wird.

In einer bevorzugten Ausführungsform ist das Epoxid ein Monoepoxid, bevorzugt ein Epoxyester wie einer der bei der Beschreibung der Komponenten (b1) bzw. (b2) vorstehend beschriebenen Glycidylester.

Die beschriebenen Epoxide werden mit einer ungesättigten säurefunktionellen Verbindung umgesetzt, um den Oxiranring zu öffnen. Es könne hier z.B. Acrylsäure und/oder Methacrylsäure verwendet werden.

Die Verbindungen (b) enthalten dabei einen $\alpha$, $\beta$-ethylenisch ungesättigten organischen Rest, über den sie in das (Meth)Acrylat(co)polymerisat einpolymerisiert werden können. Die Umsetzung des Epoxides kann dabei vor, während oder nach der Polymerisation erfolgen. Sofern diese Umsetzung während oder nach der Polymerisation erfolgt, ist durch allgemein bekannte, geeignete Maßnahmen zu gewährleisten, dass auch nach der Umsetzung das hieraus resultierende (Meth)Acrylat(co)polymerisat (B) hydroxyl- und Carbamatgruppen in ausreichender Anzahl enthält.

Das Verhältnis aller Hydroxylgruppen aus den Komponenten (A) und (B) zu den Carbamatgruppen aus Komponente (B) beträgt bevorzugt von 1:10 bis 1:0,5, besonders bevorzugt von 1:5 bis 1:0,5 und ganz besonders bevorzugt von 1:2 bis 1:1.

Vorzugsweise weisen die Oligomeren und Polymeren (B) ein zahlenmittleres Molekulargewicht von 600 bis 20.000, bevorzugt 800 bis 15.000, besonders bevorzugt 1.000 bis 10.000, ganz besonders bevorzugt 1.200 bis 8.000 und insbesondere 1.200 bis 6.000 Dalton auf.

Die in dem Verfahren zur Herstellung von kratzfesten Beschichtungen eingesetzten Beschichtungsstoffe enthalten als Vernetzungsmittel Aminoplastharze (C).

Es handelt sich dabei um Kondensationsprodukte aus Aldehyden, insbesondere Formaldehyd, und beispielsweise Harnstoff, Melamin, Guanamin und Benzoguanamin. Die Aminoplastharze enthalten Alkohol-, vorzugsweise Methylolgruppen, die in der Regel teilweise oder bevorzugt vollständig mit Alkoholen verethert sind. Es werden insbesondere mit niedrigen Alkoholen, insbesondere mit Methanol oder Butanol veretherte Melamin-Formaldehydharze eingesetzt. Ganz besonders bevorzugt werden mit niedrigen Alkoholen, insbesondere mit Methanol und/oder Ethanol und/oder Butanol veretherte Melamin-Formaldehydharze, die im statistischen Mittel pro Triazinring noch 0,1 bis 0,25 an Stickstoffatome gebundene Wasserstoffatome enthalten, als Vernetzungsmittel eingesetzt.

Hierbei kann jedes für transparente Decklacke

oder Klarlacke geeignete Aminoplastharz oder eine Mischung aus solchen Aminoplastharzen verwendet werden. Insbesondere kommen die üblichen und bekannten Aminoplastharze in Betracht, deren Methylol- und/oder Methoxymethylgruppen z. T. mittels Carbamat- oder Allophanatgruppen defunktionalisiert sind. Vernetzungsmittel dieser Art werden in den Patentschriften US 4,710,542 A und EP 0 245 700 B1 sowie in dem Artikel von B. Singh und Mitarbeiter »Carbamylmethylated Melamines, Novel Crosslinkers for the Coatings Industry « in Advanced Organic Coatings Science and Technology Series, 1991, Band 13, Seiten 193 bis 207, beschrieben. Zu den Melaminharzen sei darüber hinaus auf Römpp Lexikon Lacke und Druckfarben, 1988, Seiten 374 und 375, »Melaminharze« und auf das Buch »Lackadditive« von Johan Bielemann, 1988, Seiten 242 bis 250, Kapitel "Melaminharz-verrietzende Systeme" verwiesen.

Besonders bevorzugt ist es dabei, wenn das Vernetzungsmittel (C) dabei reich an Melaminharz ist, demzufolge also ein Melaminharz oder eine Aminoplastharzmischung mit einem Anteil Melaminharz von mindestens 60 Gew.-%, bevorzugt mindestens 70 Gew.-%, insbesondere mindestens 80 bis%, jeweils bezogen auf die Aminoplastharzmischung, ist.

Melaminharze sind dem Fachmann gut bekannt und werden von vielen Firmen als Verkaufsprodukte angeboten:

Beispiele geeigneter, niedermolekularer, voll veretherter Melaminharze sind Cymel ® 301 und 303 der Firma Cytec, Luwipal ® 066 der Firma BASF Aktiengesellschaft, Resimene ® oder Maprenal ® MF der Firma Solutia.

Beispiele geeigneter, vergleichsweise niedermolekularer, hoch veretherter Melaminharze mit freien Iminogruppen sind Cymel ® 325 und 327 (Methanol-verethert) und 1158 (Butanol-verethert) der Firma Cytec, Luwipal ® 062 (Methanol-verethert), 018 (Butanol-verethert) und 014 (Butanol-verethert, höherviskos) der Firma BASF Aktiengesellschaft, Maprenal ® MF 927 und 3950 (Methanol-verethert), VMF 3611 und 3615 (Butanol-verethert) und 580 (Isobutanol-verethert) sowie Resimene ® 717 und 718 (Methanol-verethert) und 750 und 5901 (Butanol-verethert) der Firma Solutia sowie Setamine ® US 138 und US 146 (Butanol-verethert) der Firma Akzo-Resins.

Beispiele geeigneter, vergleichsweise niedermolekularer, teilweise veretherter Melaminharze sind Luwipal ® 012, 016, 015 und 010 der Firma BASF Aktiengesellschaft, Maprenal ® MF 590 und 600 der Firma Solutia sowie Setamine ® US 132 und 134 der Firma Akzo-Resins.

Die erfindungsgemäßen Beschichtungsstoffe können ggf. mindestens ein weiteres, von den Aminoplastharzen (C) verschiedenes Vernetzungsmittel (D) enthalten. Sie werden ausgewählt aus der Gruppe, bestehend aus üblichen und bekannten Vernetzungsmitteln, die mit den Hydroxylgruppen von (A) bzw. (B) unter Ether- und/oder Esterbildung vernetzen, wie beispielsweise Anhydride, und/oder den üblichen und bekannten blockierten und/oder unblockierten Polyisocyanaten, wie sie beispielsweise in der deutschen Patentanmeldung DE 199 14 896 A1 beschrieben werden. Sind blockierte Polyisocyanate (D) enthalten, so handelt es sich bei den erfindungsgemäßen Beschichtungsstoffen um Einkomponentensysteme. Werden freie Polyisocyanate (D) verwendet, so handelt es sich bei den erfindungsgemäßen Beschichtungsstoffen um Zweikomponentensysteme.

Als zusätzlicher Vernetzer (D) kann im Prinzip jedes auf dem Lackgebiet einsetzbare Polyisocyanat bzw. eine Mischung aus solchen Polyisocyanaten eingesetzt werden, sofern die ausgehärteten Beschichtungen die obengenannten viskoelastischen Eigenschaften aufweisen. Es ist jedoch bevorzugt, Polyisocyanate einzusetzen, deren Isocyanatgruppen an aliphatische oder cycloaliphatische Reste gebunden sind. Beispiele für derartige Polyisocyanate sind Hexamethylendiisocyanat, Isophorondiisocyanat, Trimethylhexamethylendüsocyanat, Dicyclohexylmethandiisocyanat und 1,3-bis-(2-Isocyanatopropyl-2-)benzol (TMXDI), 1,3- und 1,4-Bis(isocyanatomethyl)cyclohexan sowie Addukte dieser Polyisocyanate an Polyole, insbesondere niedermolekulare Polyole, wie z.B.

Trimethylolpropan und von diesen Polyisocyanaten abgeleitete isocyanuratgruppen- und/oder biuretgruppenhaltige Polyisocyanate. Als Polyisocyanate werden besonders bevorzugt Hexamethylendiisocyanat und Isophorondiisocyanat, von diesen Diisocyanaten abgeleitete isocyanurat- und/oder biuretgruppenhaltige Polyisocyanate, die vorzugsweise mehr als 2 Isocyanatgruppen im Molekül enthalten, sowie Umsetzungsprodukte aus Hexamethylendiisocyanat und Isophorondiisocyanat oder einer Mischung aus Hexamethylendiisocyanat und Isophorondiisocyanat mit 0,3 bis 0,5 Äquivalenten eines niedermolekularen Polyols mit einem Molekulargewicht von 62 bis 500, vorzugsweise von 104 bis 204, insbesondere eines Triols, wie z.B. Trimethylolpropan, eingesetzt.

Zur Blockierung der Polyisocyanate kann im Prinzip jedes für die Blockierung von Polyisocyanaten einsetzbare Blockierungsmittel mit einer ausreichend tiefen Deblockierungstemperatur eingesetzt werden. Derartige Blockierungsmittel sind dem Fachmann gut bekannt und brauchen hier nicht näher erläutert zu werden. Es werden bevorzugt blockierte Polyisocyanate eingesetzt, die sowohl mit einem Blockierungsmittel (1) als auch mit einem Blockierungsmittel (II) blockierte Isocyanatgruppen enthalten, wobei das Blockierungsmittel (1) ein Dialkylmalonat oder eine Mischung aus Dialkylmalonaten ist, das Blockierungsmittel (II) ein von (1) verschiedenes CH-acides Blockierungsmittel, ein Oxim oder eine Mischung aus diesen Blockierungsmitteln ist und das Äquivalentverhältnis zwischen den mit (1) 25 blockierten Isocyanatgruppen und den mit (II) blockierten Isocyanatgruppen zwischen 1,0 : 1,0 und 9,0 : 1,0, vorzugsweise zwischen 8,0 : 2,0 und 6,0 : 4,0, besonders bevorzugt

zwischen 7,5 : 2,5 und 6,5 : 3,5 liegt.

Als Blockierungsmittel (1) werden Dialkylmalonate oder eine Mischung aus Dialkylmalonaten eingesetzt. Als Beispiele für einsetzbare Dialkylmalonate werden Dialkylmalonate mit je 1 bis 6 Kohlenstoffatomen in den 5 Alkylresten genannt, wie z.B. Malonsäuredimethylester und Malonsäurediethylester, wobei Malonsäurediethylester bevorzugt eingesetzt wird.

Als Blockierungsmittel (II) werden von (1) verschiedene aktive Methylengruppen enthaltende Blockierungsmittel und Oxime sowie Mischungen aus diesen Blockierungsmitteln eingesetzt. Als Beispiele für Blockierungsmittel (II) werden genannt: Acetessigsäuremethyl-, -ethyl-, - propyl-, -butyl-, -pentyl-, -hexyl-, -heptyl-, -octyl-, -nonyl-, -decyl- oder - dodecyl-ester, Acetonoxim, Methylethylketoxim, Acetylaceton, Formaldoxim, Acetaldoxim, Benzophenoxim, Acetoxim und Diisobutylketoxim. Als Blockierungsmittel (II) wird vorzugsweise ein Acetessigsäurealkylester mit 1 bis 6. Kohlenstoffatomen im Alkylrest oder eine Mischung aus solchen Acetessigsäurealkylestern oder ein Ketoxim bzw. eine Mischung aus Ketoximen eingesetzt. Besonders bevorzugt werden Acetessigsäurealkylester oder Methylethylketoxim als Blockierungsmittel (II) eingesetzt.

Als weitere Blockierungsmittel kommen noch Dimethylpyrazol und/oder Triazole in Betracht.

Der Gehalt der erfindungsgemäßen Beschichtungsstoffe an den vorstehend beschriebenen wesentlichen Bestandteilen (A) und (B) kann breit variieren und richtet sich nach den Erfordernissen des Einzelfalls, insbesondere nach der Funktionalität der komplementären reaktiven Gruppen in den Komponenten (A) und (B) einerseits und den Vernetzungsmitteln (C) und ggf. (D) andererseits. Vorzugsweise liegt der Gehalt an den Bindemitteln (A) + (B) bei 30 bis 80, bevorzugt 35 bis 75, besonders bevorzugt 40 bis 70, ganz besonders bevorzugt 45 bis 65 und insbesondere 50 bis 60 Gew.-%, jeweils bezogen auf den Festkörper des erfindungsgemäßen Stoffgemischs, der Gehalt an den Vernetzungsmitteln (C) + (D) bei 20 bis 70, bevorzugt 25 bis 65, besonders bevorzugt 30 bis 60, ganz besonders bevorzugt 35 bis 55 und insbesondere 40 bis 50 Gew.-%, jeweils bezogen auf den Festkörper des erfindungsgemäßen Stoffgemischs, und das Gewichtsverhältnis der Komponenten (C) zu (D) bei 0:1 bis 1:0, bevorzugt bei 0,2:1 bis 1:0,2, besonders bevorzugt bei 0,5:1 bis 1:0,5.

Darüber hinaus können die erfindungsgemäßen Beschichtungsstoffe noch mindestens einen üblichen und bekannten Zusatzstoff (E), ausgewählt aus der Gruppe, bestehend aus von vorstehend beschriebenen Bindemitteln (A) und (B) verschiedenen Bindemitteln, insbesondere hydroxylgruppenhaltige Bindemittel; Reaktivverdünnern; molekulardispers löslichen Farbstoffen; Lichtschutzmitteln, wie UV-Absorbern und reversiblen Radikalfängern (HALS); Antioxidantien; niedrig- und hochsiedenden . ("lange") organischen Lösemitteln; Entlüftungsmitteln; Netzmitteln; Emulgatoren; Slipadditiven; Polymerisationsinhibitoren; Katalysatoren für die Vernetzung; Haftvermittlern; Verlaufmitteln; filmbildenden Hilfsmitteln; Rheologiehilfsmitteln, wie Verdicker und strukturviskose Sag control agents, SCA; Flammschutzmitteln; Korrosionsinhibitoren ; Rieselhilfen; Wachsen; Sikkativen; Bioziden und Mattierungsmitteln, enthalten.

Beispiele geeigneter Zusatzstoffe (E) werden im Detail in dem Lehrbuch »Lackadditive« von Johan Bieleman, Wiley-VCH, Weinheim, New York, 1998, in D. Stoye und W. Freitag (Editors), »Paints, Coatings and Solvents«, Second, Completely Revised Edition, Wiley-VCH, Weinheim, New York, 1998, »14.9. Solvent Groups«, Seiten 327 bis 373 im Detail beschrieben.

Die erfindungsgemäßen Beschichtungsstoffe, die die vorstehend beschriebenen Bestandteile enthalten, werden insbesondere als Klarlacke für die Herstellung von Klarlackierungen oder als Ausgangsprodukte für die Herstellung von klaren, transparenten Folien und Formteilen verwendet.

Die erfindungsgemäßen Beschichtungsstoffe können indes auch pigmentiert sein. Vorzugsweise enthalten sie dann noch mindestens ein übliches und bekanntes Pigment (F), ausgewählt aus der Gruppe, bestehend aus organischen und anorganischen, transparenten und deckenden, farb- und/oder effektgebenden, elektrisch leitfähigen, magentisch abschirmenden und fluoreszierenden Pigmenten, Füllstoffen und Nanopartikeln.

Die pigmentierten erfindungsgemäßen Beschichtungsstoffe werden insbesondere als Elektrotrauchlacke, Füller, Basislacke und Unidecklacke zur Herstellung von Elektrotrauchlackierungen, Füllerlackierungen oder Steinschlagschutzgrundierungen, Basislakkierungen und Unidecklackierungen oder zur Herstellung von pigmentierten Folien und Formteilen eingesetzt.

Werden ausschließlich nicht deckende, transparente Pigmente (F), insbesondere Nanopartikel, verwendet, können die pigmentierten erfindungsgemäßen Beschichtungsstoffe auch als Klarlacke oder für die Herstellung von klaren, transparenten Folien und Formteilen verwendet werden.

Methodisch weist die Herstellung des erfindungsgemäßen Beschichtungsstoffe keine Besonderheiten auf, sondern erfolgt durch das Vermischen und Homogenisieren der vorstehend beschriebenen Bestandteile mit Hilfe üblicher und bekannter Mischverfahren und Vorrichtungen wie Rührkessel, Rührwerksmühlen, Extruder, Kneter, Ultraturrax, In-line-Dissolver, statische Mischer, Mikromischer, Zahnkranzdispergatoren, Druckentspannungsdüsen und/oder Microfluidizer ggf. unter Ausschluß von aktinischer Strahlung. Dabei ist es aber wesentlich, die Bestandteile der erfindungsgemäßen, Beschichtungsstoffe so auszuwählen, dass die erfindungsgemäßen Beschichtungsstoffe nach ihrer Aushärtung die vorstehend beschriebenen durch DMTA bestimmten mechanisch-dynamischen Eigenschaften aufweisen.

Die resultierenden erfindungsgemäßen Beschichtungsstoffe sind insbesondere konventionelle, organische Lösemittel enthaltende Beschichtungsstoffe. Sie können aber auch wässrige Stoffgemische, im wesentlichen oder völlig lösemittel- und wasserfreie flüssige Stoffgemische (100%-Systeme), im wesentlichen oder völlig lösemittel- und wasserfreie feste Pulver oder im wesentlichen oder völlig lösemittelfreie Pulversuspensionen (Pulverslurries) sein.

Die erfindungsgemäßen Beschichtungsstoffe werden auf übliche und bekannte temporäre oder permanente Substrate appliziert. Vorzugsweise werden für die Herstellung von erfindungsgemäßen Folien und Formteilen übliche und bekannte temporäre Substrate verwendet, wie Metall- und Kunststoffbänder oder Hohlkörper aus Metall, Glas, Kunststoff, Holz oder Keramik, die leicht entfernt werden können, ohne dass die erfindungsgemäßen Folien und Formteile beschädigt werden.

Werden die erfindungsgemäßen Beschichtungsstoffe für die Herstellung von Beschichtungen, Klebstoffen und Dichtungen verwendet, werden permanente Substrate eingesetzt, wie Kraftfahrzeugkarosserien und Teile hiervon, Bauwerke im Innen- und Außenbereich und Teile hiervon, Türen, Fenster, Möbel, Glashohlkörper, Coils, Container, Emballagen, Kleinteile, elektrotechnische Bauteile und Bauteile für weiße Ware. Die erfindungsgemäßen Folien und Formteile können ebenfalls als Substrate dienen. Weitere Beispiele geeigneter Substrate sind aus den deutschen Patentanmeldungen DE 199 24 172 A1, Seite 8, Zeilen 21 bis 37, oder DE 199 30 067 A1, Seite 13, Zeile 61, bis Seite 14, Zeile 16, bekannt.

Methodisch weist die Applikation der erfindungsgemäßen Beschichtungsstoffe keine Besonderheiten auf, sondern kann durch alle üblichen und bekannten, für das jeweilige Stoffgemisch geeigneten Applikationsmethoden, wie z.B. Elektrotauchlackieren, Spritzen, Sprühen, Rakeln, Streichen, Gießen, Tauchen, Träufeln oder Walzen erfolgen. Vorzugsweise werden Spritzapplikationsmethoden angewandt, es sei denn es handelt sich um Pulver.

Auch die Applikation der Pulver weist keine methodischen Besonderheiten auf, sondern erfolgt beispielsweise nach den üblichen und bekannten Wirbelschichtverfahren, wie sie beispielsweise aus den Firmenschriften von BASF Coatings AG, »Pulverlacke für industrielle Anwendungen«, Januar 2000, oder »Coatings Partner, Pulverlack Spezial«, 1/2000, oder Römpp Lexikon Lacke und Druckfarben, Georg Thieme Verlag, Stuttgart, New York, 1998, Seiten 187 und 188, »Elektrostatisches Pulversprühen«, »Elektrostatisches Sprühen« und »Elektrostatisches Wirbelbadverfahren«, bekannt sind.

Die erfindungsgemäßen Beschichtungsstoffe werden bevorzugt zur Herstellung von Formteilen und Folien oder als Beschichtungsstoffe, Klebstoffe und Dichtungsmassen zur Herstellung von Beschichtungen, Klebschichten und Dichtungen verwendet. Insbesondere werden die Beschichtungsstoffe zur Herstellung von farb- und/oder effektgebenden Mehrschichtlackierungen nach den üblichen und bekannten Nass-in-nass-Verfahren (vgl. beispielsweise die deutschen Patentanmeldungen DE 199 14 896 A1, Spalte 16, Zeile 54 bis Spalte 18, Zeile 57, oder DE 199 30 067 A1, Seite 15, Zeile 25, bis Seite 16, Zeile 36) verwendet.

Auch die Härtung der applizierten erfindungsgemäßen Beschichtungsstoffe weist keine methodischen Besonderheiten auf, sondern erfolgt mit Hilfe der üblichen und bekannten Methoden, wie insbesondere thermisch, beispielsweise durch Erhitzen in einem Umluftofen oder Bestrahlen mit IR-Lampen.

Bevorzugt werden die erfindungsgemäßen Beschichtungsmittel zur Herstellung von Mehrschichtlackierungen oder in Verfahren zur Herstellung von Mehrschichtlackierungen, bevorzugt dabei als Decklack, insbesondere im Bereich der Automobilserienlackierung, eingesetzt. Gegenstand der vorliegenden Erfindung ist daher auch ein Verfahren zur Herstellung von Mehrschichtlackierungen; bei dem

(1) ein pigmentierter Basislack auf die Substratoberfläche angebracht wird,
(2) aus dem Basislack ein Polymerfilm gebildet wird,
(3) auf der so erhaltenen Basislackschicht ein transparenter Decklack aufgebracht wird und anschließend
(4) die Basislackschicht und die Decklackschicht gemeinsam gehärtet werden,

dadurch gekennzeichnet, daß in mindestens einer der Lackschichten ein erfindungsgemäßes Beschichtungsmittel eingesetzt wird. Bevorzugt wird in diesem Verfahren ein erfindungsgemäßes Beschichtungsmittel als Decklack eingesetzt.

In Stufe (1) des erfindungsgemäßen Verfahrens können im Prinzip alle zur Herstellung von zweischichtigen Lackierungen geeigneten pigmentierten Basislacke eingesetzt werden. Derartige Basislacke sind dem Fachmann gut bekannt. Es können sowohl wasserverdünnbare Basislacke als auch Basislacke auf Basis von organischen Lösemitteln eingesetzt werden. Geeignete Basislacke werden beispielsweise beschrieben in der US 3,639,147 A 1, DE 33 33 072 A 1, DE 38 14 853 A 1, GB 2 012 191 A, US 3,953,644 A 1, EP 0 260 447 A 1, DE 39 03 804 A 1, EP 0 320 552 A 1, DE 36 28 124 A 1, US 4,719,132 A 1, EP 0 297 576 A 1, EP 0 069 936 A 1, EP 0 089 497 A 1, EP 0 195 931 A 1, EP 0 228 003 A 1, EP 0 038 127 A 1 und DE 28 18 100 A 1. In diesen Patentdokumenten sind auch weitere Informationen über das in Rede stehende basecoat/clearcoat-Verfahren zu finden.

Die resultierenden erfindungsgemäßen Beschichtungen und Folien, insbesondere die erfindungsgemäßen ein- oder mehrschichtigen farb- und/oder effektgebenden Lackierungen und Klarlackierungen, insbesondere die Klarlackierungen, sind einfach herzustellen und weisen hervorragende optische Eigenschaften

(Appearance) und eine sehr hohe Licht-, Chemikalien-, Wasser-, Schwitzwasser-, Witterungsbeständigkeit und Etchbeständigkeit auf. Insbesondere sind sie frei von Trübungen und Inhomogenitäten. Sie weisen eine hervorragende Kratzfestigkeit und Abriebfestigkeit bei einer hervorragenden Oberflächenhärte und Säurebeständigkeit auf. Überraschenderweise erleiden die Beschichtungen, insbesondere die Klarlackierungen, im praxisnahen AMTEC-Test nur einen Glanzunterschied vor und nach Belastung von weniger als 35, vorzugsweise weniger als 30 und insbesondere weniger als 25 Einheiten, was ihre besonders hohe Kratzfestigkeit untermauert.

Die erfindungsgemäßen Klebschichten verbinden die unterschiedlichsten Substrate auf Dauer haftfest miteinander und haben eine hohe chemische und mechanische Stabilität auch bei extremen Temperaturen und/oder Temperaturenschwankungen.

Desgleichen dichten die erfindungsgemäßen Dichtungen die Substrate auf Dauer ab, wobei sie eine hohe chemische und mechanische Stabilität auch bei extremen Temperaturen und/oder Temperaturschwankungen auch i. V. m. der Einwirkung aggressiver Chemikalien aufweisen.

Demzufolge weisen die auf den vorstehend aufgeführten technologischen Gebieten üblicherweise angewandten grundierten oder ungrundierten Substrate, die mit mindestens einer erfindungsgemäßen Beschichtung beschichtet, mit mindestens einer erfindungsgemäßen Klebschicht verklebt, mit mindestens einer erfindungsgemäßen Dichtung abgedichtet und/oder mit mindestens einer erfindungsgemäßen Folie oder mindestens einem erfindungsgemäßen Formteil umhüllt oder verpackt sind, bei einem besonders vorteilhaften anwendungstechnischen Eigenschaftsprofil eine besonders lange Gebrauchsdauer auf, was sie wirtschaftlich und ökologisch besonders attraktiv macht.

## Beispiele

### Herstellbeispiel 1

### Die Herstellung eines Methacrylatcopolymerisats (A)

In einem Labor-Reaktor mit einem Nutzvolumen von 41, ausgestattet mit einem Rührer, zwei Tropftrichtern für die Monomerenmischung respektive Initiatorlösung, Stickstoff-Einleitungsrohr, Thermometer und Rückflusskühler, wurden 601 g einer Fraktion aromatischer Kohlenwasserstoffe mit einem Siedebereich von 158 °C bis 172 °C eingewogen. Das Lösungsmittel wird auf 140°C aufgeheizt. Nach Erreichen von 140 °C wurden eine Monomermischung aus 225,4 g Styrol, 169 g n-Butylmethacrylat, 293 g Cyclohexylacrylat, 225,4 g Hydroxypropylmethacrylat, 202,8g 2-Hydroxyethylmethacrylat und 11,2 g Acrylsäure innerhalb von 4 Stunden und eine Initiatorlösung von 112,6 g t-Butylperethylhexanoat in 40 g des beschriebenen aromatischen Lösungsmittels innerhalb von 4,5 Stunden gleichmäßig in den Reaktor dosiert. Mit der Dosierung der Monomerenmischung und der Initiatoranlösung wurde gleichzeitig begonnen. Nach Beendigung der Initiatordosierung wurde die Reaktionsmischung zwei weitere Stunden auf 140°C gehalten, anschließend mit 119,6 g des beschriebenen aromatischen Lösungsmittels verdünnt und danach abgekühlt. Die resultierende Polymerlösung hatte einen Feststoffgehalt von 60 Gew.-% (bestimmt in einem Umluftofen, 1h bei 130°C). Das Methacrylatcopolymerisats weist eine Hydroxylzahl von 156 mg KOH/g, eine Säurezahl von 10 mg KOH/g, ein zahlenmittleres Molekulargewicht von 1.700 und Glasübergangstemperatur von + 65°C auf.

### Herstellbeispiel 2

### Die Herstellung eines Hydroxyl- und Carbamatgruppen enthaltenden Methacrylatcopolymerisats (B)

In einem Labor-Reaktor mit einem Nutzvolumen von 41, ausgestattet mit einem Rührer, zwei Tropftrichtern für die Monomerenmischung respektive Initiatorlösung, Stickstoff-Einleitungsrohr, Thermometer und Rückflusskühler, wurden 176,7 g einer Fraktion aromatischer Kohlenwasserstoffe mit einem Siedebereich von 158 °C bis 172°C, 188,8 g Methylcarbamat und 345,9 g Cardura® E-10 (Glycidylester der Versatic ®-Säure, Firma Shell Chemie) eingewogen. Das Lösungsmittel wurde auf 140 °C aufgeheizt. Nach Erreichen von 140 °C wurden eine Monomerenmischung aus 312 g Hydroxyethylmethacrylat, 85,4 g Cyclohexylmethacrylat, 117,41 g Methacrylsäure und 59,6 g des beschriebenen aromatischen Lösungsmittels und eine Initiatorlösung von 73,9 g Azoisovaleronitril in 36,7 g Xylol innerhalb von 1 Stunde gleichmäßig in den Reaktor dosiert. Der Reaktor wurde mit einer Destillationsbrücke ausgestattet. Anschließend wurde eine Lösung von 2 g Dibutylzinnoxid in 106 g Xylol zugegeben und auf 135 °C aufgeheizt. Die Reaktionsmischung wurde bei 135 °C gehalten und Methanol kontinuierlich abdestilliert bis eine Hydroxylzahl von 90 mg KOH/g erreicht ist (titrimetrische Bestimmung). Anschließend wurde im Vakuum bei 14 °C überschüssiges Methylcarbamat über eine Dauer von zwei Stunden abdestilliert. Die resultierende Polymerlösung wurde mit Methoxypropanol auf einen Feststoffgehalt von 70 Gew.-% verdünnt (bestimmt in einem Umluftofen, 1 h bei 130 °C). Das Harz wies ein Carbamatäquivalentgewicht CEW von 440 auf. Das Äquivalentverhältnis von Hydroxylgruppen zu Carbamatgruppen betrug 1:1,4.

**Beispiel**

**Herstellung eines Klarlacks und einer Klarlackierung**

175 g der Methacrylatcopolymerisatlösung (A) des Herstellbeispiels 1, 352 g Methacrylatcopolymerisatlösung (B) des Herstellbeispiels 2, 194 g eines Butanolveretherten Melaminharzes (Cymel® 1158 der Firma Cytec), 12 g eines blockierten Säurekatalysators (Nacure® 2500 der Firma King Industries), je 10 g Tinuvin® 248 und 123 (Lichtschutzmittel der Firma Ciba), 2 g eines handelsüblichen Verlaufshilfsmittels (Silikonöl) und 212 g Xylol wurden intensiv vermischt. Das Verhältnis von Hydroxylgruppen zu Carbamatgruppen im Klarlack betrug 1:0,8, und 77 Gew.-% der in den Bindemitteln (A) und (B) enthaltenen Hydroxylgruppen waren primäre Hydroxylgruppen.

Der Klarlack wurde nass-in-nass auf Prüftafeln, die mit schwarzen Wasserbasislackschichten beschichtet worden waren, appliziert. Die resultierenden Wasserbasislackschichten und Klarlackschichten wurden während 20 Minuten bei 140 °C eingebrannt, wodurch Prüftafeln mit Mehrschichtlackierungen aus einer schwarzen Wasserbasislackierung und einer Klarlackierungen resultierten. Die Mehrschichtlackierungen mit einer schwarzen Wasserbasislackierung wurden deshalb gewählt, weil hieran die Änderung der Appearance durch mechanische Schädigung am besten beobachtet werden konnte.

Die Kratzfestigkeit wurde nach dem in der Fachwelt bekannten Amtec-Kistler-Test unter Verwendung von 1,5 g/l Quarzfeinstmehl Sikron SH 200 bestimmt (vgl. T. Klimmasch, T. Engbert, Technologietage, Köln, DFO, Berichtsband 32, Seiten 59 bis 66,1997). Gemessen wird der Glanz nach DIN 67530 vor und nach Beschädigung (Meßrichtung senkrecht zur Kratzrichtung).

Von den Klarlacken wurden freie Filme erzeugt und diese wurden mittels DMTA untersucht. Als Maß für die Vernetzungsdichte/Kratzfestigkeit wurde das Speichermodul E' im gummielastischen Bereich bestimmt.

Die angegebenen Ergebnisse bedeuten:

| | |
|---|---|
| Glanz | Ausgangsglanz (20°) vor der Beschädigung |
| dGlanz | Glanzverlust nach der Beschädigung relativ zum Ausgangsglanz |
| E' | Speichermodul im gummielastischen Bereich der DMA |

| | erfindungsgemäßer Klarlack |
|---|---|
| Glanz | 90,2 |
| DGlanz | 22,1 |
| E' | 2 x $10^7$ |

Die Mehrschichtlackierungen zeichneten sich außerdem durch eine besonders hohe Resistenz gegenüber FAM-Prüfkraftstoff (50 Vol.-% Toluol, 30 Vol.-% Isooctan, 15 Vol.% Diisobutylen, 5 Vol.-% Ethanol gemäß VDA Prüfblatt 621-412, Grundlage DIN-Norm 53 168) aus. Ihre Säurebeständigkeit gemäß dem in der Fachwelt allgemein bekannten Opel-Test GME 60409 war hervorragend.

**Patentansprüche**

1. Beschichtungsstoffe, enthaltend

   (A) mindestens ein Hydroxylgruppen enthaltendes (Meth)Acrylat(co)polymerisat mit einer OH-Zahl von 100 bis 250 mg KOH/g, einer Säurezahl von 0 bis 35 mg KOH/g, einem zahlenmittleren Molekulargewicht $M_n$ von 1.200 bis 20.000 Dalton und einer Glasübergangstemperatur von maximal +70°C,
   (B) mindestens eine Carbamatgruppen und Hydroxylgruppen enthaltende Verbindung mit einer Hydroxylzahl von 10 bis 150 mg KOH/g , einem Carbamatäquivalentgewicht CEW von 250 bis 700 g/Äquivalent und einem Äquivalentverhältnis von Hydroxyl- zu Carbamatgruppen von 1:20 bis 1:0,5 und
   (C) mindestens ein Aminoplastharz;

   wobei

   (I) mindestens 10 Äquivalent-% der in den (Meth)Acrylat(co)polymerisaten (A) und/oder den Verbindungen (B) enthaltenen Hydroxylgruppen primäre Hydroxylgruppen sind, und wobei
   (II) die Beschichtungsstoffe nach ihrer Aushärtung ein Speichermodul E' im gummielastischen Bereich von mindestens 1,5*$10^7$ Pa aufweisen, wobei das Speichermodul E' mit der Dynamisch- Mechanischen- Thermo- Analyse (DMTA) an homogenen freien Filmen einer Schichtdicke von 40 $\pm$ 10 $\mu$m gemessen worden sind.

2. Beschichtungsstoffe nach Anspruch 1, **dadurch gekennzeichnet, dass** die Glasübergangstemperatur der (Meth)Acrylat(co)polymerisate (A) bei - 40 bis + 70 °C liegt.

3. Beschichtungsstoffe nach Anspruch 1 oder 2, **dadurch gekennzeichnet, dass** die (Meth)Acrylat(co)polymerisate (A) eine Hydroxylzahl von 160 bis 220 mg KOH/g und/oder ein zahlenmittleres Molekulargewicht $M_n$ von 1.500 bis 15.000 Dalton aufweisen.

**4.** Beschichtungsstoffe nach einem der Ansprüche 1 bis 3, **dadurch gekennzeichnet, dass** die Methacrylatcopolymerisate (A) durch Copolymerisation, von

(a1) 10 bis 51 Gew.-% 4-Hydroxy-n-butylacrylat oder 4-Hydroxy-n-butylmethacrylat oder einer Mischung aus 4-Hydroxy-n-butylacrylat und 4-Hydroxy-n-butylmethacrylat,
(b1) 0 bis 36 Gew.-% eines von (a1) verschiedenen hydroxylgruppenhaltigen Esters der Acrylsäure oder eines hydroxylgruppenhaltigen Esters der Methacrylsäure oder eines Gemisches aus solchen Monomeren,
(c1) 28 bis 58 Gew.-% eines von (a1) und (b1) verschiedenen aliphatischen oder cycloaliphatischen Esters der (Meth)acrylsäure mit mindestens 4 Kohlenstoffatomen im Alkoholrest oder eines Gemisches aus solchen Monomeren,
(d1) 0 bis 3 Gew.-% einer ethylenisch ungesättigten Carbonsäure oder einer Mischung aus ethylenisch ungesättigten Carbonsäuren und
(e1) 0 bis 40 Gew.-% eines Vinylaromaten und/oder eines von (a1), (b1), (c1) und (d1) verschiedenen ethylenisch ungesättigten Monomeren oder eines Gemisches aus solchen Monomeren

herstellbar sind, wobei die Summe der Gewichtsanteile der Komponenten (a1), (b1), (c1), (d1) und (e1) stets 100 Gew.-% ergibt.

**5.** Beschichtungsstoffe nach einem der Ansprüche 1 bis 3, **dadurch gekennzeichnet, dass** die Methacrylatcopolymerisate (A) durch Copolymerisation, von

(a2) 10 bis 51 Gew.-% eines hydroxylgruppenhaltigen Methacrylsäureesters, bevorzugt Hydroxypropylmethacrylat oder Hydroxyethylmethacrylat, oder eines Gemisches aus solchen Monomeren, bevorzugt eines Gemisches aus Hydroxypropylmethacrylat und Hydroxyethylmethacrylat,
(b2) 0 bis 36 Gew.-% eines von (a2) verschiedenen hydroxylgruppenhaltigen Esters der Acrylsäure oder eines hydroxylgruppenhaltigen Esters der Methacrylsäure oder eines Gemisches aus solchen Monomeren,
(c2) 28 bis 58 Gew.-% eines von (a2) und (b2) verschiedenen aliphatischen oder cycloaliphatischen Esters der (Meth)acrylsäure mit mindestens 4 Kohlenstoffatomen im Alkoholrest oder eines Gemisches aus solchen Monomeren,
(d2) 0 bis 3 Gew einer ethylenisch ungesättigten Carbonsäure oder einer Mischung aus ethylenisch ungesättigten Carbonsäuren und
(e2) 0 bis 40 Gew.-% Vinylaromaten und/oder eines von (a2), (b2), (c2) und (d2) verschiedenen ethylenisch ungesättigten Monomeren oder eines Gemisches aus solchen Monomeren

herstellbar sind, wobei die Summe der Gewichtsanteile der Komponenten (a1), (b1), (c1), (d1) und (e1) stets 100 Gew.-% ergibt.

**6.** Beschichtungsstoffe nach einem der Ansprüche 1 bis 5, **dadurch gekennzeichnet, dass** die Verbindung (B) ein Hydroxylgruppen und Carbamatgruppen enthaltendes (Meth)Acrylat(co)polymerisat ist.

**7.** Beschichtungsstoffe nach einem der Ansprüche 1 bis 6, **dadurch gekennzeichnet, dass** die Verbindung (B) eine Hydroxylzahl von 15 bis 120 mg KOH/g aufweist.

**8.** Beschichtungsstoffe nach einem der Ansprüche 1 bis 7, **dadurch gekennzeichnet, dass** die Verbindung (B) ein Carbamatäquivalentgewicht (CEW) von 300 bis 600 g/Äquivalent aufweist.

**9.** Beschichtungsstoffe nach einem der Ansprüche 1 bis 8, **dadurch gekennzeichnet, dass** das Verhältnis von Hydroxylgruppen zu Carbamatgruppen der Verbindung (B) 1:15 bis 1:0,8 beträgt.

**10.** Beschichtungsstoffe nach einem der Ansprüche 1 bis 9, **dadurch gekennzeichnet, dass** das Verhältnis der Hydroxylgruppen der Bestandteile (A) und (B) zu den Carbamatgruppen der Verbindung (B) 1: 10 bis 1:0,5 beträgt.

**11.** Beschichtungsstoffe nach einem der Ansprüche 1 bis 10, **dadurch gekennzeichnet, dass** mindestens 15 Äquivalent der in den (Meth)Acrylat(co)polymerisaten (A) und/oder den Verbindungen (B) enthaltenen Hydroxylgruppen primäre Hydroxylgruppen sind.

**12.** Beschichtungsstoffe nach einem der Ansprüche 1 bis 11, **dadurch gekennzeichnet, dass** das Vernetzungsmittel (C) ein Melaminharz oder eine Aminoplastharzmischung mit einem Anteil von mindestens 60 Gew.-%, bezogen auf die Aminoplastharzmischung, an Melaminharz ist.

**13.** Beschichtungsstoffe nach einem der Ansprüche 1 bis 12, **dadurch gekennzeichnet, dass** sie mindestens ein weiteres, von (C) verschiedenes Vernetzungsmittel (D), ausgewählt aus der Gruppe, bestehend aus mit den Hydroxylgruppen von (A) bzw. (B) unter Ether- und/oder Esterbildung vernetzenden Komponenten und/oder blockierten und/oder unblockierten Polyisocyanaten, enthalten.

**14.** Beschichtungsstoffe nach einem der Ansprüche 1 bis 13, **dadurch gekennzeichnet, dass** sie mindestens einen Zusatzstoff (E) und/oder mindestens ein Pigment (F) enthalten.

**15.** Beschichtungsstoffe nach einem der Ansprüche 1 bis 14, **dadurch gekennzeichnet, dass** die sie nach ihrer Aushärtung ein Speichermodul E' von mindestens $5*10^7$ Pa aufweisen.

**16.** Verfahren zur Herstellung von Beschichtungsstoffen gemäß einem der Ansprüche 1 bis 15, bei dem man

(A) mindestens ein Hydroxylgruppen enthaltendes (Meth)Acrylat(co)polymerisat,
(B) mindestens eine Carbamatgruppen und Hydroxylgruppen enthaltende Verbindung und
(C) mindestens ein Aminoplasthar,

miteinander vermischt und die resultierende Mischung homogenisiert, **dadurch gekennzeichnet, dass** die Bestandteile der Beschichtungsstoffe so ausgewählt werden, dass

(I) mindestens 10 Äquivalent-% der in den (Meth)Acrylat(co)polymerisaten (A) und/oder den Verbindungen (B) enthaltenen Hydroxylgruppen primäre Hydroxylgruppen sind und dass
(II) die Beschichtungsstoffe nach ihrer Aushärtung ein Speichermodul E' im gummielastischen Bereich von mindestens $1{,}5*10^7$ Pa aufweisen, wobei das Speichermodul E' mit der Dynamisch-Mechanischen-Thermo-Analyse an homogenen freien Filmen einer Schichtdicke von 40 ± 10 μm gemessen worden sind.

**17.** Verwendung der Beschichtungsstoffe gemäß einem der Ansprüche 1 bis 15 zur Herstellung von Beschichtungen, Klebschichten, Dichtungen, Formteile und freitragenden Folien.

**18.** Verwendung nach Anspruch 17, **dadurch gekennzeichnet, dass** die Beschichtungen Klarlackierungen oder pigmentierte Lackierungen sind.

**19.** Verwendung nach Anspruch 18, **dadurch gekennzeichnet, dass** die Beschichtungen Mehrschichtlackierungen sind.

**20.** Verwendung nach Anspruch 19, **dadurch gekennzeichnet, dass** die Beschichtungen Klarlackierungen von Mehrschichtlackierungen sind.

**21.** Verwendung nach einem der Ansprüche 17 bis 20, **dadurch gekennzeichnet, dass** die Beschichtungen im AMTEC-Test einen Glanzunterschied von weniger als 35 Einheiten aufweisen.

**Claims**

**1.** Coating materials comprising

(A) at least one hydroxyl-containing (meth)acrylate (co)polymer having an OH number of from 100 to 250 mg KOH/g, an acid number of from 0 to 35 mg KOH/g, a number-average molecular weight $M_n$ of from 1,200 to 20,000 daltons, and a glass transition temperature of not more than +70°C,
(B) at least one carbamate- and hydroxyl-functional compound having a hydroxyl number of from 10 to 150 mg KOH/g, a carbamate equivalent weight CEW of from 250 to 700 g/equivalent and an equivalents ratio of hydroxyl to carbamate groups of from 1:20 to 1:0.5, and
(C) at least one amino resin;

where

(I) at least 10 equivalent% of the hydroxyl groups present in the (meth) acrylate (co)polymers (A) and/or the compounds (B) are primary hydroxyl groups and
(II) the coating materials, after they have been cured, have a storage modulus E' in the rubber-elastic range of at least $1.5*10^7$ Pa, the storage modulus E' having been measured by dynamic mechanical thermoanalysis (DMTA) on homogeneous free films with a thickness of 40 ± 10 μm.

**2.** Coating materials according to Claim 1, **characterized in that** the glass transition temperature of the (meth)acrylate (co)polymers (A) is from -40 to +70°C.

**3.** Coating materials according to Claim 1 or 2, **characterized in that** the (meth)acrylate (co)polymers (A) have a hydroxyl number from 160 to 220 mg KOH/g and/or a number-average molecular weight $M_n$ of from 1,500 to 15,000 daltons.

**4.** Coating materials according to any of Claims 1 to 3, **characterized in that** the methacrylate copolymers (A) are preparable by copolymerizing

(a1) from 10 to 51% by weight of 4-hydroxy-n-butyl acrylate or 4-hydroxy-n-butyl methacrylate or a mixture of 4-hydroxy-n-butyl acrylate and 4-hydroxy-n-butyl methacrylate,
(b1) from 0 to 36% by weight of a hydroxyl-containing ester of acrylic acid or a hydroxyl-containing ester of methacrylic acid, other than (a1),

or of a mixture of such monomers,
(c1) from 28 to 58% by weight of an aliphatic or cycloaliphatic ester of (meth)acrylic acid having at least 4 carbon atoms in the alcohol residue, other than (a1) and (b1), or of a mixture of such monomers,
(d1) from 0 to 3% by weight of an ethylenically unsaturated carboxylic acid or of a mixture of ethylenically unsaturated carboxylic acids, and
(e1) from 0 to 40% by weight of a vinylaromatic and/or of an ethylenically unsaturated monomer other than (a1), (b1), (c1), and (d1), or of a mixture of such monomers,

the sum of the weight fractions of components (a1), (b1), (c1), (d1) and (e1) always being 100% by weight.

**5.** Coating materials according to any of Claims 1 to 3, **characterized in that** the methacrylate copolymers (A2) are preparable by copolymerizing

(a2) from 10 to 51% by weight of a hydroxyl-containing methacrylate, preferably hydroxypropyl methacrylate or hydroxyethyl methacrylate, or a mixture of such monomers, preferably a mixture of hydroxypropyl methacrylate and hydroxyethyl methacrylate,
(b2) from 0 to 36% by weight of a hydroxyl-containing ester of acrylic acid or a hydroxyl-containing ester of methacrylic acid, other than (a2), or of a mixture of such monomers,
(c2) from 28 to 58% by weight of an aliphatic or cycloaliphatic ester of (meth)acrylic acid having at least 4 carbon atoms in the alcohol residue, other than (a2) and (b2), or of a mixture of such monomers,
(d2) from 0 to 3% by weight of an ethylenically unsaturated carboxylic acid or of a mixture of ethylenically unsaturated carboxylic acids, and
(e2) from 0 to 40% by weight of vinylaromatics and/or of an ethylenically unsaturated monomer other than (a2), (b2), (c2), and (d2), or of a mixture of such monomers,

the sum of the weight fractions of components (a2), (b2), (c2), (d2) and (e2) always being 100% by weight.

**6.** Coating materials according to any of Claims 1 to 5, **characterized in that** the compound (B) is a (meth) acrylate (co)polymer containing hydroxyl groups and carbamate groups.

**7.** Coating materials according to any of Claims 1 to 6, **characterized in that** the compound (B) has a hydroxyl number of from 15 to 120 mg KOH/g.

**8.** Coating materials according to any of Claims 1 to 7, **characterized in that** the compound (B) has a carbamate equivalent weight (CEW) of from 300 to 600 g/ equivalent.

**9.** Coating materials according to any of Claims 1 to 8, **characterized in that** the ratio of hydroxyl groups to carbamate groups of the compound (B) is from 1: 15 to 1:0.8.

**10.** Coating materials according to any of Claims 1 to 9, **characterized in that** the ratio of the hydroxyl groups of the constituents (A) and (B) to the carbamate groups of the compound (B) is from 0:10 to 1:0.5.

**11.** Coating materials according to any of Claims 1 to 10, **characterized in that** at least 15 equivalent% of the hydroxyl groups present in the (meth) acrylate (co)polymers (A) and/or the compounds (B) are primary hydroxyl groups.

**12.** Coating materials according to any of Claims 1 to 11, **characterized in that** the crosslinking agent (C) is a melamine resin or an amino resin mixture having a melamine resin content of at least 60% by weight, based on the amino resin mixture.

**13.** Coating materials according to any of Claims 1 to 12, **characterized in that** they comprise at least one further crosslinking agent (D) which is different than (C) and is selected from the group consisting of components which crosslink with the hydroxyl groups of (A) and/or (B) to form ethers and/or esters, and/or of blocked and/or nonblocked polyisocyanates.

**14.** Coating materials according to any of Claims 1 to 13, **characterized in that** they comprise at least one additive (E) and/or at least one pigment (F).

**15.** Coating materials according to any of Claims 1 to 14, **characterized in that** after they have cured they have a storage modulus E' of at least $5*10^7$ Pa.

**16.** Process for preparing coating materials according to any of Claims 1 to 15, in which

(A) at least one hydroxyl-containing (meth)acrylate (co)polymer,
(B) at least one compound containing carbamate groups and hydroxyl groups and
(C) at least one amino resin,

are mixed with one another and the resulting mixture is homogenized, **characterized in that** the constituents of the coating materials are selected such that

(I) at least 10 equivalent% of the hydroxyl groups

present in the (meth)acrylate (co)polymers (A) and/or the compounds (B) are primary hydroxyl groups and

(II) the coating materials, after they have been cured, have a storage modulus E' in the rubber-elastic range of at least $1.5*10^7$ Pa, the storage modulus E' having been measured by dynamic mechanical thermoanalysis on homogeneous free films with a thickness of 40 $\pm$ 10 $\mu$m.

**17.** Use of the coating materials according to any of Claims 1 to 15 for producing coatings, adhesive films, seals, moldings or self-supporting films.

**18.** Use according to Claim 17, **characterized in that** the coatings are clearcoats or pigmented paint systems.

**19.** Use according to Claim 18, **characterized in that** the coatings are multicoat paint systems.

**20.** Use according to Claim 19, **characterized in that** the coatings are clearcoats of multicoat paint systems.

**21.** Use according to any of Claims 17 to 20, **characterized in that** the coatings exhibit a gloss difference in the AMTEC test of less than 35 units.

## Revendications

**1.** Substances de revêtement qui contiennent :

(A) au moins un polymère ou copolymère de (méth)acrylate qui contient des groupes hydroxyle à un indice OH de 100 à 250 mg KOH/g, avec un indice d'acidité de 0 à 35 mg KOH/g, un poids moléculaire moyen en nombre $M_n$ de 1 200 à 20 000 Dalton et une température de transition vitreuse d'au plus 70 °C,

(B) au moins un composé qui contient des groupes carbamate et des groupes hydroxyle, avec un indice hydroxyle de 10 à 150 mg KOH/g, un poids équivalent en carbamate CEW de 250 à 700 g/équivalent et un rapport d'équivalence entre les groupes hydroxyle et les groupes carbamate de 1 : 20 à 1 : 0,5 et

(C) au moins une résine aminoplastique

dans lesquelles

(I) au moins 10 % en équivalents des groupes hydroxyle contenus dans les polymères ou copolymères de (méth)acrylate (A) et/ou dans les composés (B) sont des groupes hydroxyle primaire et

(II) les substances de revêtement présentent après durcissement un module d'accumulation E' dans la plage élastique caoutchouteuse d'au moins 1,5 x $10^7$ Pa, le module d'accumulation E' ayant été mesuré par thermoanalyse dynamique-mécanique (DMTA) sur des films libres homogènes d'une épaisseur de 40 $\pm$ 10 $\mu$m.

**2.** Substances de revêtement selon la revendication 1, **caractérisées en ce que** la température de transition vitreuse des polymères ou copolymères de (méth)acrylate (A) est située entre -40 et +70 °C.

**3.** Substances de revêtement selon les revendications 1 ou 2, **caractérisées en ce que** les polymères ou copolymères de (méth)acrylate (A) compte un indice hydroxyle compris entre 160 et 220 mg KOH/g et/ou un poids moléculaire moyen en nombre $M_n$ de 1 500 à 15 000 Dalton.

**4.** Substances de revêtement selon l'une des revendications 1 à 3, **caractérisées en ce que** les copolymères de méthacrylate (A) peuvent être préparés par copolymérisation de

(a1) de 10 à 51 % en poids d'acrylate de 4-hydroxy-n-butyle ou de méthacrylate de 4-hydroxy-n-butyle ou d'un mélange d'acrylate de 4-hydroxy-n-butyle et de méthacrylate de 4-hydroxy-n-butyle,

(b1) de 0 à 36 % en poids d'un ester d'acide acrylique qui contient des groupes hydroxyle et différent de (a1) ou d'un ester d'acide méthacrylique qui contient des groupes hydroxyle ou d'un mélange de ces monomères,

(c1) de 28 à 58 % en poids d'un ester aliphatique ou cycloaliphatique d'acide (méth)acrylique, différent de (a1) et (b1), et qui compte au moins 4 atomes de carbone dans le groupe alcool, ou d'un mélange de ces monomères,

(d1) de 0 à 3 % en poids d'un acide carboxylique éthyléniquement insaturé ou d'un mélange d'acides carboxyliques éthyléniquement insaturé et

(e1) de 0 à 40 % en poids d'un aromate de vinyle et/ou d'un monomère éthyléniquement insaturé différent de (a1), (b1), (c1) et (d1) ou d'un mélange de ces monomères,

la somme des teneurs en poids des composants (a1), (b1), (c1), (d1) et (e1) donnant toujours 100 % en poids.

**5.** Substances de revêtement selon l'une des revendications 1 à 3, **caractérisées en ce que** les copolymères de méthacrylate (A) peuvent être préparés par copolymérisation de :

(a2) de 10 à 51 % en poids d'un ester d'acide

méthacrylique qui contient des groupes hydroxyle, de préférence de méthacrylate d'hydroxypropyle ou de méthacrylate d'hydroxyéthyle, ou d'un mélange de ces monomères, de préférence d'un mélange de méthacrylate d'hydroxypropyle et de méthacrylate d'hydroxyéthyle,

(b2) de 0 à 36 % en poids d'un ester d'acide acrylique, qui contient des groupes hydroxyle et différent de (a2) ou d'un ester d'acide méthacrylique, qui contient des groupes hydroxyle, ou d'un mélange de ces monomères,

(c2) de 28 à 58 % en poids d'un ester aliphatique ou cycloaliphatique, différent de (a2) et (b2), de l'acide (méth)acrylique qui compte au moins 4 atomes de carbone dans le groupe alcool, ou d'un mélange de ces monomères,

(d2) de 0 à 3 % en poids d'un acide carboxylique éthyléniquement insaturé ou d'un mélange d'acides carboxyliques éthyléniquement insaturés et

(e2) de 0 à 40 % en poids d'aromates de vinyle et/ou d'un monomère éthyléniquement insaturé différent de (a), (b2), (c2) et (d2), ou d'un mélange de ces monomères,

la somme des teneurs en poids des composants (a1), (b1), (c1), (d1) et (e1) donnant toujours 100% en poids.

**6.** Substances de revêtement selon l'une des revendications 1 à 5, **caractérisées en ce que** le composé (B) est un polymère ou copolymère de (méth)acrylate qui contient des groupes hydroxyle ou des groupes carbamate.

**7.** Substances de revêtement selon l'une des revendications 1 à 6, **caractérisées en ce que** le composé (B) présente un indice hydroxyle de 15 à 20 mg KOH/g.

**8.** Substances de revêtement selon l'une des revendications 1 à 7, **caractérisées en ce que** le composé (B) présente un poids équivalent de carbamate (CEW) de 300 à 600 g/équivalent.

**9.** Substances de revêtement selon l'une des revendications 1 à 8, **caractérisées en ce que** le rapport entre les groupes hydroxyle et les groupes carbamate du composé (B) est compris entre 1 : 15 et 1 : 0,8.

**10.** Substances de revêtement selon l'une des revendications 1 à 9, **caractérisées en ce que** le rapport entre les groupes hydroxyle des composant (A) et (B) et les groupes carbamate du composé (B) est compris entre 1 : 10 et 1 : 0,5.

**11.** Substances de revêtement selon l'une des revendications 1 à 10, **caractérisées en ce qu'**au moins 15 % en équivalents des groupes hydroxyle contenus dans les polymères ou copolymères de (méth) acrylate (A) et/ou dans les composés (B) sont des groupes hydroxyle primaire.

**12.** Substances de revêtement selon l'une des revendications 1 à 11, **caractérisées en ce que** l'agent de réticulation (C) est une résine de mélamine ou un mélange de résines aminoplastiques dont la teneur en résine de mélamine est d'au moins 60 % en poids par rapport au mélange de résines aminoplastiques.

**13.** Substances de revêtement selon l'une des revendications 1 à 12, **caractérisées en ce qu'**elles contiennent au moins un autre agent de réticulation (D) différent de (C), sélectionné dans l'ensemble constitué des composants qui réticulent avec les groupes hydroxyle (A) ou (B) en formant des éthers ou des esters et/ou des polyisocyanates bloqués et/ou non bloqués.

**14.** Substances de revêtement selon l'une des revendications 1 à 13, **caractérisées en ce qu'**elles contiennent au moins un additif (E) et/ou au moins un pigment (F).

**15.** Substances de revêtement selon l'une des revendications 1 à 14, **caractérisées en ce qu'**après leur durcissement, elles présentent un module d'accumulation (E') d'au moins 5 x $10^7$ Pa.

**16.** Procédé de préparation de substances de revêtement selon l'une des revendications 1 à 15, dans lequel on mélange les uns avec les autres :

(A) au moins un polymère ou copolymère de (méth)acrylate qui contient des groupes hydroxyle,

(B) au moins un composé qui contient des groupes carbamate et des groupes hydroxyle et

(C) au moins une résine aminoplastique,

le mélange ainsi obtenu étant homogénéisé, **caractérisé en ce que** les composants de la substances de revêtement sont sélectionnés de telle sorte que :

(I) au moins 10 % en équivalents des groupes hydroxyle contenus dans les polymères ou copolymères de (méth)acrylate (A) et/ou dans les composés (B) sont des groupes hydroxyle primaire et

(II) les substances de revêtement présentent après durcissement un module d'accumulation E' dans la plage élastique caoutchouteuse d'au moins 1,5 x $10^7$ Pa, le module d'accumulation

E’ ayant été mesuré par thermoanalyse dynamique-mécanique (DMTA) sur des films libres homogènes d’une épaisseur de 40 ± 10 µm.

**17.** Utilisation des substances de revêtement selon l’une des revendications 1 à 15 pour la préparation de revêtements, de couches d’adhésif, de joints d’étanchéité, de pièces moulées et de feuilles libres.

**18.** Utilisation selon la revendication 17, **caractérisé en ce que** les revêtements sont des vernis transparents ou des vernis pigmentés.

**19.** Utilisation selon la revendication 18, **caractérisé en ce que** les revêtements sont des revêtements en plusieurs couches.

**20.** Utilisation selon la revendication 19, **caractérisé en ce que** les revêtements sont des vernis transparents ou des vernis en plusieurs couches.

**21.** Utilisation selon l’une des revendications 17 à 20, **caractérisée en ce que** dans le test AMTEC, les revêtements présentent une différence de brillant inférieure à 35 unités.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9840442 A
- EP 0675141 A1
- EP 0915113 A1
- EP 0994930 B1
- EP 1042402 B1
- DE 4409715 A1
- DE 19709467 C2
- US 3479328 A
- US 3674838 A
- US 4126747 A
- US 4279833 A
- US 4340497 A
- US 4758632 A
- US 4301257 A
- US 2979514 A
- DE 19946048
- DE 10129969
- EP 0675141 A
- EP 0915113 A
- US 4710542 A
- EP 0245700 B1
- DE 19914896 A1
- DE 19924172 A1
- DE 19930067 A1
- US 3639147 A
- DE 3333072 A
- DE 3814853 A
- GB 2012191 A
- US 3953644 A
- EP 0260447 A
- DE 3903804 A
- EP 0320552 A
- DE 3628124 A
- US 4719132 A
- EP 0297576 A
- EP 0069936 A
- EP 0089497 A
- EP 0195931 A
- EP 0228003 A
- EP 0038127 A
- DE 2818100 A


### In der Beschreibung aufgeführte Nicht-Patentliteratur


- **MURAYAMA, T.** *Dynamic Mechanical Analysis of Polymeric Materials,* 1978
- **LOREN W. HILL.** *Joumal of Coatings Technology,* Mai 1992, vol. 64 (808), 31-33
- **TH. FREY ; K.-H. GROßE BRINKHAUS ; U. RÖCKRATH.** Cure Monitoring Of Thermoset Coatings. *Progress In Organic Coatings,* 1996, vol. 27, 59-66
- **HOUBEN-WEYL.** *Methoden der organischen Chemie,* 1961, vol. 14 (1), 24-255
- **P. ADAMS ; F. BARON.** Esters of Carbamic Acid. *Chemical Review,* 1965, vol. 65
- Römpp Lexikon Lacke und Druckfarben. Georg Thieme Verlag, 1998, 457
- Versatic®-Säuren. Römpp Lexikon Lacke und Druckfarben. Georg Thieme Verlag, 1998, 605, 606
- **B. SINGH ; MITARBEITER.** Carbamylmethylated Melamines, Novel Crosslinkers for the Coatings Industry. *Advanced Organic Coatings Science and Technology Series,* 1991, vol. 13, 193-207
- Melaminharze. *Römpp Lexikon Lacke und Druckfarben,* 1988, 374, 375
- **JOHAN BIELEMANN.** Melaminharz-verrietzende Systeme. *Lackadditive,* 1988, 242-250
- **JOHAN BIELEMAN.** Lackadditive. Wiley-VCH, 1998
- Paints, Coatings and Solvents. Wiley-VCH, 1998, vol. 14.9., 327-373
- Römpp Lexikon Lacke und Druckfarben. Georg Thieme Verlag, 1998, 187, 188